(19) Europäisches Patentamt
European Patent Office
Office européen des brevets

(11) EP 1 175 452 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **00931063.2**

(22) Anmeldetag: **18.04.2000**

(51) Int Cl.[7]: **C08F 293/00**, C08L 53/02

(86) Internationale Anmeldenummer:
**PCT/EP2000/003539**

(87) Internationale Veröffentlichungsnummer:
**WO 2000/063267 (26.10.2000 Gazette 2000/43)**

(54) **BLOCKCOPOLYMERE UND VERFAHREN ZU IHRER HERSTELLUNG**

BLOCK COPOLYMERS AND METHOD FOR PRODUCING THEM

COPOLYMERES SEQUENCES ET PROCEDE DE PRODUCTION

(84) Benannte Vertragsstaaten:
**AT BE CH CY DE DK ES FI FR GB GR IE IT LI LU MC NL PT SE**

(30) Priorität: **19.04.1999 DE 19917675**

(43) Veröffentlichungstag der Anmeldung:
**30.01.2002 Patentblatt 2002/05**

(73) Patentinhaber: **BASF AKTIENGESELLSCHAFT**
**67056 Ludwigshafen (DE)**

(72) Erfinder:
- **BRINKMANN-RENGEL, Suzanne**
  **D-55270 Ober-Olm (DE)**
- **NIESSNER, Norbert**
  **D-67159 Friedelsheim (DE)**
- **SUTORIS, Heinz, Friedrich**
  **D-67551 Worms (DE)**
- **MC KEE, Graham, Edmund**
  **D-67433 Neustadt (DE)**
- **KNOLL, Konrad**
  **D-67069 Ludwigshafen (DE)**
- **CHRISTIE, David**
  **D-68165 Mannheim (DE)**

(74) Vertreter: **Kinzebach, Werner, Dr. et al**
**Ludwigsplatz 4**
**67059 Ludwigshafen (DE)**

(56) Entgegenhaltungen:
**WO-A-96/20248**
**WO-A-97/27233**
**US-A- 4 581 429**
**US-A- 5 677 388**
**US-A- 5 763 548**
**US-A- 5 807 937**

- **GEORGES M K ET AL: "COMMUNICATIONS TO THE EDITOR. BLOCK COPOLYMER SYNTHESIS BY A NITROXIDE-MEDIATED LIVING FREE RADICAL POLYMERIZATION PROCESS" MACROMOLECULES,US,AMERICAN CHEMICAL SOCIETY. EASTON, Bd. 31, Nr. 25, 15. Dezember 1998 (1998-12-15), Seiten 9087-9089, XP000788850 ISSN: 0024-9297**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 175 452 B1

Printed by Jouve, 75001 PARIS (FR)

## Beschreibung

Die vorliegende Erfindung betrifft ein Verfahren zur Herstellung eines kautschukelastischen Blockcopolymerisates aus
mindestens einem Block A, der aus vinylaromatischen Monomeren aufgebaut ist und eine Hartphase bildet, und/oder
mindestens einem Block B, der aus Dienmonomeren aufgebaut ist und eine kautschukelastische Weichphase bildet, und
mindestens einem Block B/A, der aus vinylaromatischen Monomeren und aus Dienmonomeren aufgebaut ist und eine (gegebenenfalls weitere) kautschukelastische Weichphase bildet,
wobei vorzugsweise die Glastemperatur $T_g$ des Blocks A über 25°C und die des Blocks B/A unter 25°C liegt.

Außerdem betrifft die Erfindung die nach diesem Verfahren erhältlichen Blockcopolymerisate, deren Verwendung zur Herstellung von Formkörpern, Folien und Schäumen, und Formkörper, Folien und Schäume aus den Blockcopolymeren.

Blockcopolymere von Vinylaromaten (z.B. Styrol) und Dienen (z.B. Butadien) sind Copolymere aus mehreren aneinandergereihten oder sonstwie verknüpften Polymermolekül-Bereichen (sog. Blöcken), wobei die Blöcke in sich mehr oder weniger einheitlich aufgebaut sind. Die Blockcopolymere können je nach Struktur und Gehalt an Dienmonomeren - bei einer bestimmten Temperatur - insgesamt elastomere, d.h. kautschukelastische Eigenschaften oder steife, nicht-kautschukelastische Eigenschaften haben, d.h. sie verhalten sich nach außen hin insgesamt entweder kautschukelastisch, ähnlich wie ein Polydien und haben z.B. als sog. SB-Rubber Bedeutung, oder wie transparente, schlagzähe Styrolpolymere. Blockcopolymere erhält man dadurch, daß jeweils ein Monomer oder Monomergemisch polymerisiert und das oder die Monomeren dann gewechselt werden. Dieser Vorgang ist mehrfach wiederholbar. Es ist üblich, in Anlehnung an die Bezeichnungen beim schlagzäh modifizierten Polystyrol diejenigen Molekülteile, die das kautschukelastische Verhalten bestimmen, als Weichphase und die starren Molekülteile (den reinen Polystyrolanteil) als Hartphase zu bezeichnen.

Lineare Blockcopolymere werden z.B. in den US-PSen 3 507 934 und 4 122 134 beschrieben. Sternförmige Blockcopolymere sind z.B. aus den US-PSen 4 086 298; 4 167 545 und 3 639 517 bekannt.

Das Eigenschaftsprofil dieser Blockcopolymeren wird wesentlich durch den Gehalt einpolymerisierter Dienmonomerer, d.h. Länge, Anordnung und Mengenverhältnis von Polydien- und Polystyrol-Blökken geprägt. Darüberhinaus spielt die Art und Weise des Übergangs zwischen unterschiedlichen Blöcken eine wichtige Rolle: Man kennt scharfe und sog. verschmierte (tapered) Übergänge, je nachdem, ob der Monomerenwechsel abrupt oder allmählich stattfindet. Im letzteren Fall tritt eine mehr oder weniger statistische Sequenzlängenverteilung auf. Einzelheiten sind in der DE-OS 44 20 952 ausführlich erläutert.

Besonders Blockcopolymere mit einem Dien-Gehalt von über 35 Gew.%, die aufgrund ihres Eigenschaftsprofils (Zähigkeit, Transparenz, Gasdurchlässigkeit) für medizintechnische Anwendungen wie Infusionsschläuche, Infusionstropfkammern und Dehnfolien geeignet wären, sind nur sehr schwierig durch Profilextrusion, Spritzguß oder Schlauchfolienextrusion zu verarbeiten; sie sind auch trotz Stabilisierung mit Antioxidantien und Radikalfängern thermisch sehr empfindlich und neigen zur Klebrigkeit, so daß man sich aufwendig mit Additiven behelfen muß. Das sog. Blocken (Verkleben von Folien und Schläuchen auf der Rolle) und schlechte Entformbarkeit können die Verarbeitung durch Spritzguß gänzlich unmöglich machen.

Auch Blockcopolymere mit einem Dien-Gehalt bis zu 35 % tendieren jedoch bei längerer thermischer Belastung und Scherbeanspruchung, wie sie vor allem bei der Extrusion vorkommen, nach wie vor zu Gelbildung (Vernetzung über die olefinisch ungesättigten Kettenelemente). Insbesondere bei der Herstellung von Folien können sich Gelanteile als sogenannte "Stippen" störend bemerkbar machen. Die Vernetzungsneigung wird vor allem den in Polydienen vorhandenen Kurzkettenverzweigungen (1,2-Vinyl-Anteilen), also Seitenketten der Struktur $CH\text{-}CH{=}CH_2$ zugeschrieben.

Die beschriebenen Blockcopolymere konnten bisher nur nach dem Verfahren der anionischen Polymerisation hergestellt werden.
DE-OS 44 20 952 beschreibt diese anionische Polymerisation, sowie Blockcopolymere enthaltend eine Hartphase aus Styroleinheiten, und/oder eine weichphase aus Butadieneinheiten, und eine Weichphase aus Styrol- und Butadieneinheiten in statistischer Verteilung.

Das Verfahren der anionischen Polymerisation hat den Nachteil, daß unter striktem Feuchtigkeitsausschluß gearbeitet werden muß: schon geringe Mengen Luftfeuchtigkeit zerstören den Initiator (z.B. Butyllithium oder andere metallorganische Verbindungen). Daher müssen die Apparaturen und Einsatzstoffe von Wasserspuren befreit werden, was zeitaufwendig und teuer ist.

Die übliche radikalisch initiierte Polymerisation von wenigstens eine ethylenisch ungesättigte Gruppe aufweisenden Monomeren weist den Nachteil auf, daß das Molekulargewicht der Polymerketten mit dem Polymerisationsumsatz normalerweise nicht zunimmt und daß die Polymerketten des resultierenden Polymerisats in der Regel kein

einheitliches Molekulargewicht aufweisen. D.h., das erhältliche Polymerisat ist bezüglich der Eigenschaft Molekulargewicht in der Regel nicht monodispers, sondern weist üblicherweise einen diesbezüglichen Polydispersitätsindex PDI von ≥ 2 auf (PDI = $\overline{M}_w/\overline{M}_n$, mit $\overline{M}_w$ = gewichtsmittleres Molekulargewicht und $\overline{M}_n$ = zahlenmittleres Molekulargewicht). Dies ist vermutlich insbesondere auf Abbruchreaktionen infolge irreversibler Kombination wachsender freier radikalischer Polymerisatkettenenden sowie auch auf Kettenübertragungsreaktionen, Disproportionierung und Eliminierung, zurückzuführen.

Aus TRIPS Vol. 4, No. 6, June 1996, S. 183 ff, US-A 5,322,912, WO 96/24620, US-A-4,581,429, US-$_A$ 5,412,047, EP-A 135 280 sowie aus DE-A 19602539 ist bekannt, daß die Durchführung von radikalisch initiierten Polymerisationen bei oberhalb 100°C liegenden Temperaturen im Beisein eines stabilen (im wesentlichen nicht initiierend wirkenden) N-Oxyl-Radikals eine gewisse Kontrolle der radikalisch initiierten Polymerisation ermöglicht.

Der zugrunde liegende Wirkmechanismus liegt vermutlich darin begründet, daß die stabilen N-Oxyl-Radikale reaktive radikalische Enden einer wachsenden Polymerisatkette bei erhöhten Temperaturen nicht irreversibel terminieren, sondern lediglich vorübergehend blockieren. Daraus resultiert eine Verringerung der stationären Konzentration wachsender freier radikalischer Polymerisatkettenenden, was die Möglichkeit für einen irreversiblen Abbruch des Kettenwachstums durch Kombination zweier wachsender Polymerisatkettenenden verringert. Dies führt im Mittel zu mit dem Polymerisationsumsatz (im Idealfall linear) wachsenden Polymerisatketten. Letztes bedingt ein mit dem Polymerisationsumsatz (im Idealfall linear) wachsendes mittleres Molekulargewicht des gebildeten Polymerisats mit vergleichsweise engen Molekulargewichtsverteilungen.

Gemäß US-A 5,322,912, Spalte 10, Zeile 65 ff kommt als Reaktionsmedium für eine solche kontrollierte radikalisch initiierte Polymerisation auch eine Emulsion in Betracht. Weitergehende Angaben zur Durchführung einer solchen radikalisch initiierten Emulsionspolymerisation macht die US-A 5,322,912 nicht. Das gleiche gilt für die DE-A 19602539. Die US-A 5,412,047 empfiehlt in Spalte 18, Zeilen 54 ff für den Fall, daß die radikalisch initiierte Polymerisation in einem mehrphasigen System erfolgt, wie es bei der radikalisch initiierten wäßrigen Emulsionspolymerisation der Fall ist, lediglich, stabile N-Oxyl-Radikale zu verwenden, die in Wasser eine besonders geringe Löslichkeit aufweisen.

US-A 4,581,429 offenbart die Herstellung von kurzkettigen Homound Copolymeren (Oligomeren) mit weniger als 200 Monomereinheiten durch kontrollierte radikalische Polymerisation. Es werden einige Oligomere mit Blockaufbau beschrieben, deren Molmassen $\overline{M}_n$ jedoch unter 11000 [g/mol] liegen.

In der DE-A 197 38 081 wird ein verfahren zur Herstellung von partikelförmigen Polymerisaten durch kontrollierte radikalische Polymerisation beschrieben. Die DE-19803098 offenbart ein Verfahren zur Herstellung von Polymerisatpartikeln mit großem Durchmesser durch kontrollierte radikalische Polymerisation.

Der Erfindung lag die Aufgabe zugrunde, den geschilderten Nachteilen abzuhelfen. Insbesondere sollte ein Verfahren bereitgestellt werden, mit dem sich Blockcopolymere in großtechnisch einfacher weise herstellen lassen. Das Verfahren soll gegen Wasser unempfindlich sein, also ohne strikten Feuchtigkeitsausschluß funktionieren.

Außerdem lag die Aufgabe zugrunde, Blockcopolymere bereitzustellen, die bei niedrigem Diengehalt ausgewogene mechanische Eigenschaften, insbesondere eine hohe Zähigkeit besitzen und auf Extrudern oder Spritzgußmaschinen einfach zu verarbeiten sind. Insbesondere sollen bei der Verarbeitung keine "Stippen" auftreten.

Demgemäß wurde das eingangs definierte Verfahren gefunden. Es ist dadurch gekennzeichnet, daß die Monomeren unter Verwendung mindestens eines radikalischen Polymerisationsinitiators polymerisiert werden.

Weiterhin wurden die nach diesem Verfahren erhältlichen Blockcopolymerisate, deren Verwendung zur Herstellung von Formkörpern, Folien und Schäumen, und Formkörper, Folien und Schäume aus den Blockcopolymeren gefunden.

Das erfindungsgemäße Verfahren liefert ein kautschukelastisches Blockcopolymerisat aus mindestens einem einpolymerisierte Einheiten eines vinylaromatischen Monomeren aufweisenden, eine Hartphase bildenden Block A und mindestens einem einpolymerisierte Einheiten eines vinylaromatischen Monomeren sowie eines Diens aufweisenden elastomeren, eine Weichphase bildenden Block B/A, wobei vorzugsweise die Glastemperatur $T_g$ des Blocks A über 25°C und die des Blocks B/A unter 25°C liegt.

Man erhält ein solches kautschukelastisches Blockcopolymerisat dadurch, daß im Rahmen der vorstehenden Parameter die Weichphase aus einen statistischen Copolymerisat eines Vinylaromaten mit einem Dien gebildet wird.

Zur Durchführung des erfindungsgemäßen Verfahrens geht man im Allgemeinen so vor, dass man wenigstens eine erste Monomerzusammensetzung unter Verwendung mindestens eines radikalischen Polymerisationsinitiators polymerisiert, wobei man ein intermediäres Polymerisat erhält, und dann wenigstens eine zweite Monomerzusammensetzung in Gegenwart des intermediären Polymerisats polymerisiert, wobei man ein Blockcopolymerisat erhält, wobei entweder die erste oder die zweite Monomerzusammensetzung aus Monomeren besteht, die den Block A oder den Block B konstituieren und die andere Monomerzusammensetzung aus Monomeren besteht, die den Block B/A konstituieren. Der Begriff "Monomerzusammensetzung" soll sowohl ein reines Monomer als auch Monomergemische umfassen. Gewünschtenfalls kann das intermediäre Polymerisat isoliert werden; im Allgemeinen ist es jedoch bevorzugt, nach Herstellung des intermediären Polymerisats unter Zugabe der zweiten Monomerzusammensetzung oder Komponenten der zweiten Monomerzusammensetzung durchzuführen. Zweckmäßigerweise gibt man solche Komponenten der zweiten Monomerzusammensetzung zu, die im Gemisch mit nicht umgesetzten Monomeren der ersten Monomerzusammensetzung die zweite Monomerzusammensetzung bilden. Besteht die erste Monomerzusammensetzung beispielsweise aus Styrol, so kann man nach der Bildung des intermediären Polymerisats dem Reaktionsmedium Butadien zufügen, das zusammen mit überschüssigem Styrol eine aus Styrol/Butadien bestehende zweite Monomerzusammensetzung bildet.

Die mit dem erfindungsgemäßen Verfahren erhältlichen Blockcopolymerisate können z.B. durch eine der allgemeinen Formeln 1 bis 11 dargestellt werden:

(1) $(A\text{-}B/A)_n$;

(2) $(A\text{-}B/A)_n\text{-}A$;

(3) $B/A\text{-}(A\text{-}B/A)_n$;

(4) $X\text{-}[(A\text{-}B/A)_n]_{m+1}$;

(5) $X\text{-}[(B/A\text{-}A)_n]_{m+1}$;

(6) $X\text{-}[(A\text{-}B/A)_n\text{-}A]_{m+1}$;

(7) $X\text{-}[(B/A\text{-}A)_n\text{-}B/A]_{m+1}$;

(8) $Y\text{-}[(A\text{-}B/A)_n]_{m+1}$;

(9) $Y\text{-}[(B/A\text{-}A)_n]_{m+1}$;

(10) $Y\text{-}[(A\text{-}B/A)_n\text{-}A]_{m+1}$;

(11) $Y\text{-}[(B/A\text{-}A)_n\text{-}B/A]_{m+1}$;

wobei A für den vinylaromatischen Block und B/A für die weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

Bevorzugt ist ein Blockcopolymerisat einer der allgemeinen Formeln A-B/A-A, $X\text{-}[\text{-}B/A\text{-}A]_2$ und $Y\text{-}[\text{-}B/A\text{-}A]_2$ (Bedeutung der Abkürzungen wie vorstehend) und besonders bevorzugt ein Blockcopolymerisat, dessen weichphase unterteilt ist in Blöcke

(12) $(B/A)_1\text{-}(B/A)_2$;

(13) $(B/A)_1\text{-}(B/A)_2\text{-}(B/A)_1$;

(14) $(B/A)_1\text{-}(B/A)_2\text{-}(B/A)_3$;

wobei die Blöcke unterschiedlich aufgebaut sind bzw. sich deren Vinylaromat/Dien-Verhältnis in den einzelnen Blöcken (B/A) derart ändert, daß in jedem Teilabschnitt (Teilblock) ein Zusammensetzungsgradient $(B/A)_{p1} << (B/A)_{p2} << (B/A)_{p3}$ vorkommt, wobei die Glasübergangstemperatur $T_g$ jedes Teilblocks unter 25°C liegt. Solche Blockcopolymerisate, die innerhalb eines Blocks (B/A) z.B. p sich wiederholende Abschnitte (Teilblöcke) mit wechselndem Monomeraufbau aufweisen, können durch portionsweise Zugabe der Monomeren gebildet werden, wobei p eine ganze Zahl zwischen 2 und 10 bedeutet. Die portionsweise Zugabe kann z.B. dazu dienen, den Wärmehaushalt im Reaktionsgemisch zu kontrollieren.

Ein Blockcopolymerisat, das mehrere Blöcke B/A und/oder A mit unterschiedlicher Molmasse je Molekül aufweist, ist ebenfalls bevorzugt.

Ebenso kann an die Stelle eines ausschließlich aus vinylaromatischen Einheiten aufgebauten Blocks A ein Block B treten, da es insgesamt lediglich darauf ankommt, daß ein kautschukelastisches Blockcopolymerisat gebildet wird. Solche Copolymerisate können z.B. die Struktur (15) bis (18) haben

(15) B-(B/A)

(16) (B/A)-B-(B/A)

(17) $(B/A)_1$-B-$(B/A)_2$

(18) B-$(B/A)_1$-$(B/A)_2$.

Die Blockcopolymerisate eignen sich hervorragend zur Herstellung von kautschukelastischen Formteilen mit den üblichen Methoden der Thermoplastverarbeitung, z.B. als Folie, Schaum, Thermoformling, Spritzgußformling oder Profilextrudat.

Bevorzugt als vinylaromatische Verbindung ist Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen äquivalente von Styrol und Butadien muß man ggf. die Angaben entsprechend umrechnen.

Die Mengen an Styrol und Butadien werden bevorzugt so gewählt, daß der B/A-Block etwa 75 - 10 Gew.-% Styrol und 25 - 90 Gew.-% Butadien enthält. Besonders bevorzugt hat ein Weichblock einen Butadienanteil zwischen 25 und 85 % und einen Styrolanteil zwischen 75 und 15 %.

Der Gewichtsanteil des Diens im gesamten Blockcopolymer liegt im Falle der Monomerkombination Styrol/Butadien üblicherweise bei 15 - 80 Gew.-%, derjenige der vinylaromatischen Komponente entsprechend bei 85 - 20 Gew.-%. Bevorzugt sind Butadien-Styrol-Blockcopolymere mit einer Monomerzusammensetzung aus 30 - 70 Gew.% Dien und 70 - 30 Gew.% an vinylaromatischer Verbindung, besonders bevorzugt aus 60 - 40 Gew.-% Dien und 40 - 60 Gew.-% vinylaromat.

Für die mechanischen Eigenschaften ist der Volumenanteil der Weichphase im Festkörper von Bedeutung. Er liegt üblicherweise bei 10 bis 99 Vol.-%. Bei elastomeren Blockcopolymeren liegt der Volumenanteil der aus Dien- und vinylaromatischen Sequenzen aufgebauten Weichphase üblicherweise bei 60 - 99, bevorzugt bei 70 - 90 und besonders bevorzugt bei 80 - 90 Vol.-%. Die aus den vinylaromatischen Monomeren entstandenen Blöcke A bilden die Hartphase, deren Volumenanteil entsprechend üblicherweise 1-40, bevorzugt 10-30 und besonders bevorzugt 10-20 Vol% ausmacht.

Im Falle eines schlagfesten Thermoplasten liegt der Volumenanteil der Weichphase üblicherweise bei 10 - 59, bevorzugt 20 - 50 und insbesondere 25 - 40 Vol.-%. Der Volumenanteil der Hartphase (Blöcke A) macht entsprechend 41 - 90, bevorzugt 50 - 80 und insbesondere 60 - 75 Vol.-% aus.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils

durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt.

Der Quotient aus dem Volumenanteil in Prozent der aus den B/A-Blöcken gebildeten Weichphase und dem Anteil an Dieneinheiten in der Weichphase, liegt für die Kombination Styrol/Butadien im allgemeinen zwischen 25 und 70 Gew.%.

Durch den statischen Einbau der vinylaromatischen Verbindungen in den Weichblock des Blockcopolymeren wird die Glasübergangstemperatur ($T_g$) beeinflußt. Eine Glasübergangstemperatur zwischen -50 und +25°C, bevorzugt -50 bis +5°C ist typisch.

Das Molekulargewicht (Zahlenmittel $\overline{M}_n$) des Blocks A liegt dabei i.a. zwischen 1000 bis 200.000, bevorzugt zwischen 3.000 und 80.000 [g/mol]. Innerhalb eines Moleküls können A-Blöcke unterschiedliche Molmasse haben.

Das Molekulargewicht $\overline{M}_n$ des Blocks B/A liegt üblicherweise zwischen 2.000 bis 250.000 [g/mol], bevorzugt werden Werte zwischen 5.000 bis 150.000 [g/mol].

Auch Block B/A kann wie Block A innerhalb eines Moleküls unterschiedliche Molekulargewichtswerte einnehmen.

Das Molekulargewicht $\overline{M}_n$ des gesamten Blockcopolymeren liegt bevorzugt über 11000, besonders bevorzugt zwischen 13000 und 500000 [g/mol].

Das Kupplungszentrum X wird durch die Umsetzung der lebenden Kettenenden mit mindestens einer Einheit eines funktionellen Monomers wie zum Beispiel Maleinsäure, Itaconsäure, 2-Hydroxyethylacrylat, Hydroxyethylmethacrylat, Glycidylmethacrylat, tert.-Butylaminoethylmethacrylat, beschrieben in Ullmanns Encyklopädie der technischen Chemie, 4. Auflage, Band 19, Seite 9 und 10, und Reaktion mit einem mindestens bifunktionellen Kupplungs-(Kopplungs-)mittel gebildet. Beispiel für derartige verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Auch Chloralkylsilane wie Dichlordialkylsilane, Dialdehyde wie Terephthalaldehyd und Ester wie Ethylformiat oder -benzoat sind geeignet.

Bevorzugte Polymerstrukturen sind A-B/A-A, X-[-B/A-A]$_2$ und Y-[-B/-A-A]$_2$, wobei der statistische Block B/A selbst wieder in Blöcke $B_1/A_1$-$B_2/A_2$-$B_3/A_3$-... unterteilt sein kann.

Erfindungsgemäß wird das Verfahren unter Verwendung mindestens eines radikalischen Polymerisationsinitiators durchgeführt.

Es handelt sich demnach nicht, wie beim Stand der Technik (DE-OS 44 20 952) um eine anionische, sondern um eine radikalische Polymerisation, die unempfindlich gegen Feuchtigkeit ist.

Das erfindungsgemäße Verfahren kann auf verschiedene weise durchgeführt werden, insbesondere in Emulsion, in Mikroemulsion, in Miniemulsion, in Suspension, in Mikrosuspension, in Minisuspension, als Fällungspolymerisation, in Masse oder in Lösung, kontinuierlich oder diskontinuierlich.

Bei der Emulsionspolymerisation und ihren Varianten (Mikroemulsion, Miniemulsion) werden die Monomeren in Wasser emulgiert, wozu Emulgatoren mitverwendet werden. Die für die Stabilisierung der Emulsion geeigneten Emulgatoren sind seifenartige Hilfsstoffe, welche die Monomerentröpfchen umhüllen und auf diese Weise vor dem Zusammenlaufen schützen.

Als Emulgatoren eignen sich die dem Fachmann bekannten anionischen, kationischen und neutralen (nichtionogenen) Emulgatoren. Anionische Emulgatoren sind z.B. Alkalimetallsalze von höheren Fettsäuren mit 10 bis 30 C-Atomen wie Palmitin-, Stearin- und Ölsäure, Alkalimetallsalze von Sulfonsäuren mit z.B. 10 bis 16 C-Atomen, insbesondere Natriumsalze von Alkyl- oder Alkylarylsulfonsäuren, Alkalimetallsalze von Halbestern der Phthalsäure, und Alkalimetallsalze von Harzsäuren wie Abietinsäure. Kationische Emulgatoren sind z.B. Salze langkettiger, insbesondere ungesättigter Amine mit 12-18 C-Atomen, oder quaternäre Ammoniumverbindungen mit längerkettigen Olefin- oder Paraffinresten (also Salze quaternisierter Fettamine). Neutrale Emulgatoren sind z.B. ethoxylierte Fettalkohole, ethoxylierte Fettsäuren oder ethoxylierte Phenole und Fettsäureester von mehrwertigen Alkoholen wie Pentaerythrit oder Sorbit.

Für die Emulsionspolymerisation werden bevorzugt Initiatoren verwendet, die in dem Monomeren schlecht löslich, in Wasser dagegen gut löslich sind. Es werden daher bevorzugt Peroxosulfate wie Kalium-, Natrium- oder Ammoniumperoxodisulfat verwendet, oder auch Redox-Systeme, insbesondere solche auf Basis von Hydroperoxiden wie Cumolhydroperoxid oder Dicumylperoxid.

Der oder die Initiatoren können vor oder nach der Herstellung der Emulsion zugegeben werden, oder erst unmittelbar vor Beginn der Polymerisation, oder auch kontinuierlich im Verlauf der Polymerisation nachdosiert werden.

Insbesondere bei Monomeren, die zu unkontrollierter Polymerisation neigen, oder bereits bei der Temperatur der Emulsionsherstellung polymerisieren, ist es ratsam, den Initiator erst nach der Emulgierung, u.U. erst unmittelbar vor der Polymerisation, zuzugeben.

Insbesondere bei Polymerisationen mit einer langen Polymerisationsdauer kann es vorteilhaft sein, den Initiator, als kontinuierlichen Zulauf oder portionsweise, während der Polymerisation zuzugeben. Dabei kann die Dauer des Initiatorzulaufs von der Dauer der Polymerisation verschieden oder gleich sein.

Als weitere Zusatzstoffe können bei der Polymerisation Puffersubstanzen wie $Na_2HPO_4$ / $NaH_2PO_4$ oder Na-citrat/Citronensäure verwendet werden, um einen im wesentlichen konstant bleibenden pH-Wert einzustellen. Weiterhin können Molekulargewichtsregler, etwa Mercaptane wie t-Dodecylmercaptan, oder Ethylhexylthioglycolat mitverwendet werden. Diese weiteren Zusatzstoffe können kontinuierlich oder diskontinuierlich am Anfang und/oder während der Herstellung der Emulsion und/oder während der Polymerisation, zugefügt werden.

Man nimmt die Emulsionspolymerisationsreaktion in der Regel unter langsamem oder mäßigem Rühren vor.

Die Mikroemulsionspolymerisation unterscheidet sich von der normalen Emulsionspolymerisation vor allem dadurch, daß aus den Monomeren, Wasser und den Emulgatoren eine Emulsion bereitet wird, indem man hohe Scherkräfte einwirken läßt. Dazu verwendet man Homogenisatoren, die dem Fachmann bekannt sind.

Beispielhaft seien genannt:

- Labordissolver Dispermat, Fa. VMA-Getzmann, Reichshof, DE
- Ultra-Turax, Fa. Janke und Kunkel, Staufen, DE
- Druckhomogenisator, Fa. Gaulin, Lübeck, DE
- Geräte mit einem Rotor-Stator-System, etwa
    - Dispax, Fa. Janke und Kunkel, Staufen, DE
    - Cavitron-Homogenisatoren, Fa. v. Hagen & Funke, Sprochhövel, DE
    - Homogenisatoren der Fa. Kotthoff, Essen, DE
    - Homogenisatoren der Fa. Dorr Oliver,Grevenbroich, DE.

Üblicherweise betreibt man diese Geräte bei Drehzahlen von 1000 bis 25 000 $min^{-1}$, bevorzugt 2000 bis 25 000 $min^{-1}$.

Weiterhin können die hohen Scherkräfte ebenso durch

- Einwirkung von Ultraschall,
- Hindurchpressen der Mischung aus Monomeren, Wasser und Schutzkolloiden bzw. Emulgatoren unter hohem Druck durch einen engen Spalt oder durch Düsen kleinen Durchmessers
- Kolloidmühlen

oder andere geeignete Homogenisatoren erzeugt werden.

Die Miniemulsionspolymerisation unterscheidet sich von der normalen Emulsionspolymerisation und der Mikroemulsionspolymerisation vor allem dadurch, daß die Partikelgröße in der Regel zwischen 30-500 mn beträgt (also zwischen den typischen Partikelgrößen der Emulsions- und der Mikroemulsionspolymerisation liegt), und die Partikel üblicherweise durch eine Kombination von ionischen Emulgatoren und Co-Emulgatoren gegen das Zusammenlaufen stabilisiert werden.

Bei der Miniemulsion wird das Gemisch aus Monomeren, Wasser, Emulgatoren und Co-Emulgatoren hohen Scherkräften ausgesetzt, wodurch die Komponenten innig vermischt werden. Anschließend wird polymerisiert. Die hohen Scherkräfte können beispielsweise durch Ultraschall oder durch ein Microfluidizer-Gerät erzeugt werden, wie bei der Mikroemulsion beschrieben. Einzelkeiten der Miniemulsion findet der Fachmann in P. Covell, M. El-Asser, Emulsion Polymerization and Emulsion Polymers, Verlag John Wiley, New York, 1997, S. 699-722.

Als Co-Emulgatoren werden solche Verbindungen gewählt, die bewirken, daß die Tröpfchen, die vor dem Starten der Polymerisation gebildet werden, sehr klein aber nicht thermodynamisch stabil sind (siehe Gilbert, "Emulsion Polymerization, A Mechanistic Approach", Academic Press, London San Diego 1995, S. 12-14). Als Co-Emulgatoren werden üblicherweise langkettige Alkane wie Hexadecan oder langkettige Alkohole wie Hexadecanol (Cetylalkohol) oder Dodecanol eingesetzt.

Bei der Suspensionspolymerisation und ihren Varianten (Mikrosuspension, Minisuspension) werden die Monomeren in Wasser suspendiert, wozu Schutzkolloide mitverwendet werden.

Als Schutzkolloide eignen sich Cellulosederivate wie Carboxymethylcellulose und Hydroxymethylcellulose, Poly-N-Vinylpyrrolidon, Polyvinylalkohol und Polyethylenoxid, anionische Polymere wie Polyacrylsäure und deren Copolymere und kationische wie Poly-N-vinylimidazol. Die Menge dieser Schutzkolloide beträgt vorzugsweise 0,1 bis 5 Gew.-%, bezogen auf die Gesamtmasse der Emulsion. Schutzkolloide sowie Verfahren zur Herstellung von Schutzkolloiden sind an sich bekannt und beispielsweise in Encyclopedia of Polymer Science and Engineering, vol. 16, S. 448, Verlag John Wiley, 1989, beschrieben.

Bevorzugt werden ein oder mehrere Polyvinylalkohole als Schutzkolloid verwendet, insbesondere solche mit einem Hydrolysegrad unter 96 mol-%, besonders bevorzugt 60 bis 94 und ganz besonders bevorzugt 65 bis 92 mol-%. Die bevorzugten Polyvinylalkohole haben eine Viskosität von 2 bis 100 mPa/s, insbesondere von 4 bis 60 mPa/s, gemessen als 4 Gew.-%ige Lösung in Wasser bei 20°C nach DIN 53015.

Man kann zusätzlich zu den Schutzkolloiden kolloidale Kieselsäure in Konzentration von in der Regel 0,2 bis 5 Gew.-%, bezogen auf die Menge der Dispersion, mitverwenden. Näheres zu dieser Methode, die besonders gut mit einem wasserlöslichen Polymeren aus Adipinsäure und Diethanolamin als Schutzkolloid gelingt, ist der US-A 3 615 972 zu entnehmen.

Für die Suspensionspolymerisation sind Initiatoren mit einer Halbwertzeit von einer Stunde, wenn die Temperatur bei 40 bis 150°C liegt, und die in den Monomeren merklich löslich, in Wasser dagegen schlecht löslich sind, bevorzugt.

Es werden daher organische Peroxide, organische Hydroperoxide, Azoverbindungen und/oder Verbindungen mit C-C-Einfachbindungen als Initiatoren RI verwendet. Ebenso werden als radikalische Polymerisationsinitiatoren Monomere verwendet, die bei erhöhter Temperatur spontan polymerisieren. Es können auch Mischungen der genannten Initiatoren RI verwendet werden. Bei den Peroxiden sind diejenigen mit hydrophoben Eigenschaften bevorzugt, insbesondere solche Moleküle mit einem Atomverhältnis Kohlenstoff zu Sauerstoff von größer 3:1. Ganz besonders bevorzugt sind Dilaurylperoxid und Dibenzoylperoxid.

Als Azoverbindungen werden 2,2'Azobis(2-methylbutyronitril) und 2,2'-Azobis(isobutyronitril) bevorzugt. Als Verbindungen mit labilen C-C-Bindungen verwendet man bevorzugt 3,4-Dimethyl-3,4-diphenylhexan und 2,3-Dimethyl-2,3-diphenylbutan.

Je nach Aggregatzustand des Initiators für die Suspensionspolymerisation und seinem Löslichkeitsverhalten kann er als solcher, bevorzugt jedoch als Lösung, Emulsion (flüssig in flüssig) oder Suspension (fest in flüssig) zugefügt werden, wodurch sich insbesondere kleine Stoffmengen Initiator präziser dosieren lassen.

Es ist auch möglich, den Initiator für die Suspensionspolymerisation im Lösungsmittel oder im Monomeren zu lösen und die entstandene Lösung in Wasser zu dispergieren.

Man nimmt die Polymerisationsreaktion in der Regel unter langsamem oder mäßigem Rühren vor.

Die Mikrosuspensionspolymerisation unterscheidet sich von der normalen Suspensionspolymerisation vor allem dadurch, daß durch Einwirkung hoher Scherkräfte eine feinteilige Suspension bereitet wird. Einzelheiten wurden bereits bei der Mikroemulsionspolymerisation beschrieben.

Die Minisuspensionspolymerisation unterscheidet sich von der normalen Suspensionspolymerisation und der Mikrosuspensionspolymerisation vor allem dadurch, daß die Partikelgrößen in der Regel zwischen denen der Suspensions- und der Mikrosuspensionspolymerisation liegen.

Bei der Fällungspolymerisation sind die eingesetzten Monomere in der kontinuierlichen Phase (z.B. Lösungsmittel oder Lösungsmittelgemisch) löslich, die entstehenden Polymere sind jedoch nicht oder nur begrenzt löslich und fallen daher während der Polymerisation aus. Auch Substanzpolymerisationen, bei denen das entstehende Polymer im Monomer unlöslich ist und daher ausfällt, sind möglich. Je nach Reaktionsmedium sind die bei der Emulsions- bzw. Suspensionspolymerisation beschriebenen Initiatoren möglich. Es kann auch thermisch initiiert werden.

Bei der Massepolymerisation werden die Monomeren ohne Zugabe eines Reaktionsmediums unter Verwendung der genannten monomerlöslichen Initiatoren polymerisiert, d.h. die Monomeren sind das Reaktionsmedium. Es kann auch thermisch initiiert werden.

Die Lösungspolymerisation unterscheidet sich von der Massepolymerisation vor allem dadurch, daß ein organisches Lösungsmittel wie Cyclohexan, Ethylbenzol oder Dimethylsulfoxid oder zur Verdünnung der Monomeren mitverwendet wird. Es können auch die genanten Initiatoren eingesetzt werden, oder es kann thermisch initiiert werden.

Das erfindungsgemäße Verfahren kann auch als kombiniertes verfahren ausgeführt werden, bei dem mindestens zwei der zuvor beschriebenen Polymerisationsverfahren miteinander kombiniert werden. Hier sind insbesondere Masse/Lösung, Lösung/Fällung, Masse/Suspension und Masse/Emulsion zu nennen, wobei mit dem erstgenannten begonnen und mit dem letztgenannten beendet wird.

Die Menge an radikalischem Initiator beträgt bevorzugt $10^{-6}$ bis 5 mol/l, insbesondere $10^{-4}$ bis $10^{-1}$ mol/l, bezogen auf die Monomeren. Die genaue Menge richtet sich in bekannter Weise nach dem gewünschten Molekulargewicht des Polymerisates. Diese Mengenangaben beziehen sich naturgemäß nicht auf den Fall, daß ein Monomer zugleich Initiator ist und thermisch initiiert wird, wie es etwa beim Styrol möglich ist.

Bevorzugt werden bei dem erfindungsgemäßen Verfahren die Monomeren durch kontrollierte radikalische Polymerisation in Gegenwart eines kontrolliert radikalisch polymerisierenden Systems polymerisiert.

Unter "kontrolliert radikalisch polymerisierendes System", das bei der Polymerisation der monomeren, in dieser bevorzugten Ausführungsform mitverwendet wird, soll eine chemische Verbindung oder mehrere chemische Verbindungen verstanden werden, die bewirken, daß die Polymerisation nach dem Prinzip der kontrollierten radikalischen Polymerisation abläuft. "System" bedeutet hier also eine Einzelverbindung oder die Gesamtheit von zusammenwirkenden Verbindungen.

Das Prinzip der kontrollierten radikalischen Polymerisation besteht darin, durch Zusatz geeigneter Hilfsverbindungen ein Gleichgewicht zwischen reaktiven Macroradikalen, d. h. eine oder mehrere Monomereinheiten umfassenden Ketten mit einem Radikalzentrum am Kettenende, und "schlafenden", d. h. temporär passivierten, Macroradikalen auszubilden. Dadurch wird die Gleichgewichtskonzentration an reaktiven Macroradikalen im Vergleich zu einer

unkontrollierten radikalischen Polymerisation stark verringert. Unter diesen Bedingungen erfolgt der weitere Einbau von Monomeren am Kettenende im Wesentlichen statistisch. Auf diese Weise gelingt die Herstellung von Copolymeren oder Copolymerabschnitten eines Blockcopolymerisats aus Comonomeren mit unterschiedlicher Reaktivität. Zur Ausbildung des Gleichgewichts zwischen schlafenden und reaktiven Macromolekülen ist vielfach die Anwendung erhöhter Polymerisationstemperaturen erforderlich.

Die schlafenden Macromoleküle können, wenn die Polymerisation z. B. durch Abkühlung des Reaktionsmediums unterbrochen oder die anwesenden Monomere aufgebraucht sind, in Gegenwart anderer Monomere reaktiviert werden, was die vorteilhafte Herstellung von Blockcopolymerisaten erlaubt.

Die kontrollierte radikalische Polymerisation (KRP) kann mit verschiedenen Methoden durchgeführt werden. Für jede Methode wird ein verschiedenes kontrolliert radikalisch polymerisierendes System verwendet. Die wichtigsten Methoden und ihre Systeme sind:

• Atom Transfer Radical Polymerization (ATRP) und verwandte Methoden

Hierbei wird der Wechsel der Oxidationsstufe eines Metalls wie z.B. Kupfer, Nickel oder Ruthenium, dazu verwendet, ein Gleichgewicht zwischen radikalisch wachsendem Polymerkettenende und einer unreaktiven "schlafenden" Spezies einzustellen. Beispiele sind beschrieben in:

- J.S. Wang et al., Macromolecules 28, 7901 (1995)
- J.S. Wang et al., J. Am. Chem. Soc. 117, 5614 (1995)
- M. Kato et al., Macromolecules 28, 1721 (1995)
- V. Percec et al., Macromolecules 28, 7970 (1995)
- B.B. Wayland et al., J. Am. Chem. Soc. 116, 7943 (1994)
- C. Granel et al., Macromolecules 29, 8576 (1996)

Bei der ATRP-Methode erfolgt eine reversible Homolyse einer kovalenten, inaktiven Spezies, gefolgt von einer Monomerinsertion und anschließender reversibler Rekombination.

• Verwendung von Triazolinyl-Verbindungen zur kontrollierten Re-Initiierung bei der KRP.

Diese Methode ist beispielsweise in M. Steenbock et al., Macromolecules 31, 5223 (1998) beschrieben.

• katalysatischer Kettentransfer (Catalytic Chain Transfer, CCT)

Hierbei wird ein Metallkomplex, z. B. ein Cobaltkomplex, mit hoher Übertragungskonstante in geringen Mengen eingesetzt, um definierte Molekulargewichte einzustellen. Diese Methode ist z. B. in M.D. Eason et al., ACS Polymer Preprints 39(2), 455 (1998) beschrieben.

• Reversible Addition Fragmentation Chain Transfer (RAFT)

Hierbei werden Monomere in Gegenwart von Verbindungen der Formel

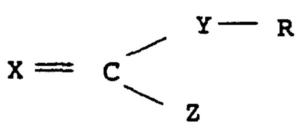

X = S, Se
Y = S, Se
R,Z = beliebige Reste

kontrolliert radikalisch polymerisiert. Einzelheiten werden in J. Chiefari et al., Macromolecules 31, 5559 (1998) beschrieben.

• Initiator-Transfer-Termination (Iniferter)

Hierbei werden Verbindungen verwendet, die als Ketteninitiator, als Übertragungsagens (Transferagens) und als Kettenterminator wirken. Die Methode ist beschrieben in T. Otsu et al., in Macromolekular Design: Concept and Practice, Hrg. M.K. Mishra, S. 481, Polymer Frontiers Int., New York 1994.

• Stable Free Radical Polymerization (SFRP)

Hierbei wird in Gegenwart stabiler Radikale polymerisiert und das Gleichgewicht zwischen wachsendem Polymerkettenende und inaktiven Spezies zur Kontrolle der Polymerisationsreaktion genutzt.
Die SFRP-Methode ist besonders bevorzugt. Als stabile Radikale werden insbesondere stabile N-Oxyl-Radikale verwendet. Details wurden weiter oben bereits erläutert.
Als für diese besonders bevorzugte Ausführungsform, also die KRP mit der SFRP-Methode, geeignete stabile N-Oxyl-Radikale kommen alle diejenigen in Betracht, die in der EP-A 135 280, der DE-A 19651307, der US-A 5,322,912, der US-A 4,581,429, der WO 96/24620, der US-A 5,412,047 sowie der DE-A 19602539 genannt sind.
Solche geeigneten, sich von einem sekundären Amin ableitenden, stabile N-Oxyl-Radikale sind z.B. jene der allgemeinen Formel I

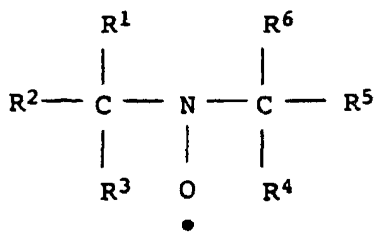 (I),

mit

| | |
|---|---|
| $R^1$,$R^2$,$R^5$ und $R^6$ = | dieselben oder verschiedene gerad- oder verzweigtkettige, gegebenenfalls substituierte Alkylgruppen, Cycloalkylgruppen, Aralkylgruppen oder Arylgruppen und |
| $R^3$ und $R^4$ = | dieselben oder verschiedene gerad- oder verzweigtkettige, gegebenenfalls substituierte Alkylgruppen oder |
| $R^3CNCR^4$ = | einen Teil einer zyklischen Struktur mit einem gegebenenfalls ankondensierten anderen gesättigten oder aromatischen Ring, wobei die zyklische Struktur oder der aromatische Ring gegebenenfalls substituiert sind. |

Als Verbindungen I kommen insbesondere jene in Betracht, die in der EP-A 135 280, der DE-A 19651307, der US-A 5,322,912, der US-A 5,412,047, der US-A 4,581,429, der DE-A 16 18 141, CN-A 1052847, US-A 4,670,131, US-A 5,322,960 sowie der DE-A 19602539 genannt sind.
Beispiele dafür sind jene stabilen N-Oxyl-Radikale der allgemeinen Formel I, bei welchen $R^1$, $R^2$, $R^5$ und $R^6$ für (gleiche oder verschiedene) Methyl-, Ethyl-, n-Propyl-,iso-Propyl-, n-Butyl-, iso-Butyl-, tert.-Butyl-, lineares oder verzweigtes Pentyl-, Phenyl- oder substituierte Gruppen hiervon und $R^3$ und $R^4$ für (gleiche oder verschiedene) Methyl-, Ethyl-, n-Propyl-, iso-Propyl-, n-Butyl-, iso-Butyl-, tert.-Butyl-, lineares oder verzweigtes Pentyl-, substituierte Gruppen hiervon oder - sofern $R^3CNCR^4$ einen Teil einer zyklischen Struktur bildet - die zyklische Struktur

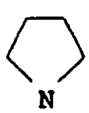 oder 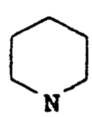 oder 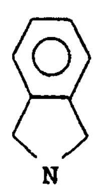 oder 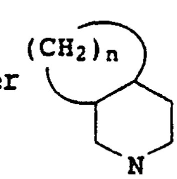 oder 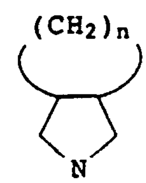

mit n gleich einer ganzen Zahl von 1 bis 10 (häufig 1 bis 6), einschließlich substituierter derartiger zyklischer Gruppen,

stehen. Als beispielhafte Vertreter seien 2,2,6,6-Tetramethyl-1-oxyl-piperidin, 2,2,5,5-Tetramethyl-1-oxyl-pyrrolidin und 4-Oxo-2,2,6,6-tetramethyl-1-oxyl-piperidin genannt.

Die stabilen N-Oxyl-Radikale lassen sich aus den entsprechenden sekundären Aminen durch oxidation, z.B. mit Wasserstoffperoxid, herstellen. In der Regel sind sie als Reinsubstanz darstellbar.

Zu den stabilen N-Oxyl-Radikalen zählen insbesondere Piperidinoder Pyrrolidin-N-Oxyle und Di-N-Oxyle der nachstehenden allgemeinen Formeln II bis XI:

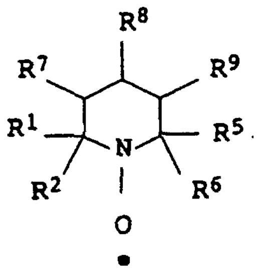
(II),

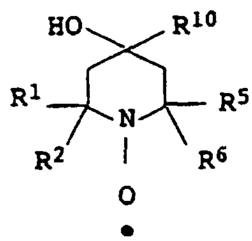
(III),

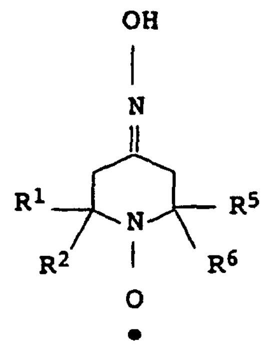
(IV),

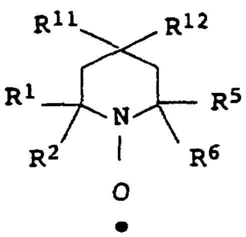
(V),

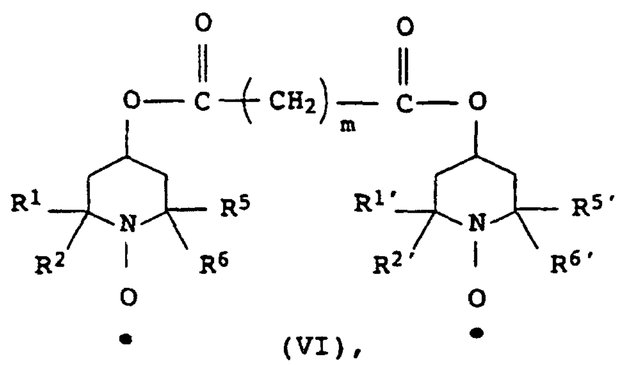
(VI),

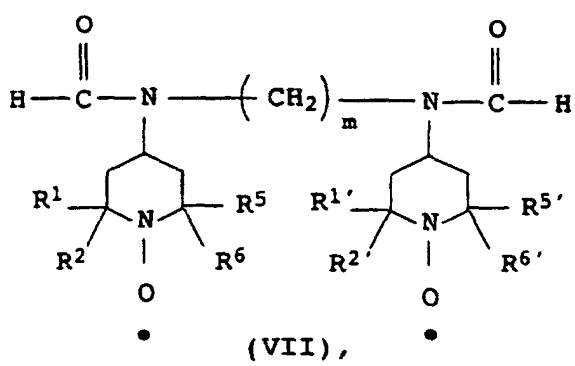
(VII),

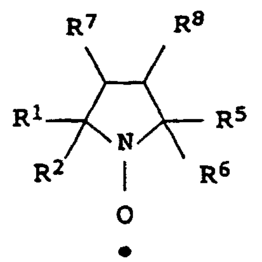
(VIII),

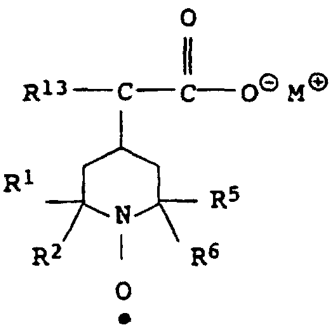

(IX),

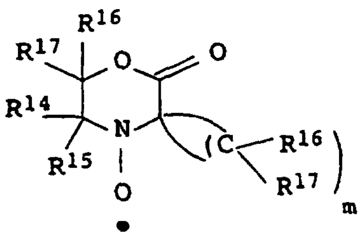

(X),

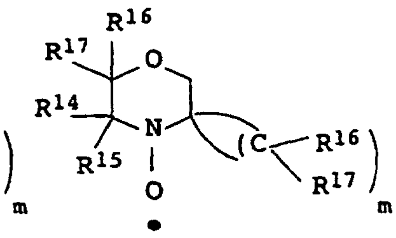

(XI)

mit

m = 2 bis 10,

$R^7$,$R^8$,$R^9$ = unabhängig voneinander
—H,

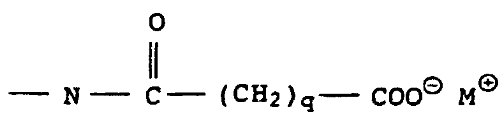
, =O ,

— $NH_2$,

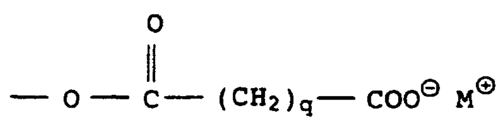
,

— $COO^{\ominus} M^{\oplus}$, —$SO_3^{\ominus} M^{\oplus}$, —$PO_3^{\ominus} M^{\oplus}$,
—O—$PO_3^{2\ominus} M_2^{\oplus}$, —O—$SO_3^{\ominus} M^{\oplus}$, —OH,

$-O-(CH_2-CH_2-O)_q H$

oder

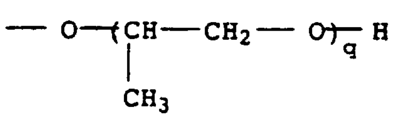
,

$M^{\oplus}$ = Wasserstoff- oder ein Alkalimetallion (insbesondere $K^{\oplus}$ oder $Na^{\oplus}$),

q = eine ganze Zahl von 1 bis 100,

$R^{1'}$,$R^{2'}$,$R^{5'}$,$R^{6'}$ = unabhängig voneinander und unabhängig von $R^1$, $R^2$, $R^5$, $R^6$ dieselben Gruppen wie $R^1$,

$R^{10}$ = -H, $C_1$- bis $C_4$-Alkyl, -CH=$CH_2$, -C≡CH, -CN,

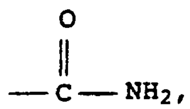

-COO$^{\ominus}$ M$^{\oplus}$, -$COOCH_3$ oder -$COOC_2H_5$,

$R^{11}$ = ein organischer Rest, der wenigstens eine primäre, sekundäre (z.B. -$NR^1$) oder tertiäre Aminogruppe (z.B. -$NR^1R^2$) oder wenigstens eine Ammoniumgruppe -$N^{\oplus}R^{13}R^{14}R^{15}X^{\ominus}$ aufweist, mit $X^{\ominus}$ = $F^{\ominus}$, $Cl^{\ominus}$, $Br^{\ominus}$, $HSO_4^{\ominus}$, $SO_4^{2\ominus}$, $H_2PO_4^{\ominus}$, $HPO_4^{2\ominus}$ oder $PO_4^{3\ominus}$ und $R^{13}$, $R^{14}$, $R^{15}$ voneinander unabhängige organische Reste (z.B. unabhängig voneinander dieselben Gruppen wie $R^1$),

$R^{12}$ = unabhängig von $R^{11}$ dieselben Gruppen wie $R^{11}$ oder -H, -OH, $C_1$- bis $C_4$-Alkyl, -COO$^{\ominus}$M$^{\oplus}$, -C≡CH,

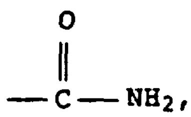 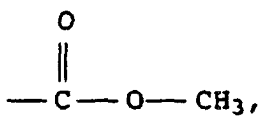 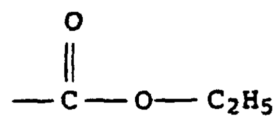

oder hydroxysubstituiertes $C_1$- bis $C_4$-Alkyl (z.B. hydroxyethyl oder hydroxypropyl) und

$R^{13}$ = —H, —$CH_3$ oder

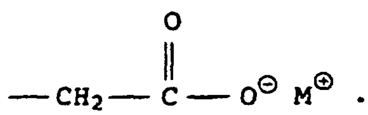

$R^{14}$,$R^{15}$ unabhängig voneinander dieselbe oder verschiedene gerad- oder verzweigtkettige, gegebenenfalls substituierte Alkylgruppen oder Cycloalkylgruppen, oder gegebenenfalls substituierte $C_6$-$C_{20}$-Arylgruppen und

$R^{16}$,$R^{17}$ unabhängig voneinander Wasserstoff oder dieselben Gruppen wie $R^{14}$, $R^{15}$.

Vorzugsweise ist $R^1 = R^2 = R^5 = R^6 = R^{1'} = R^{2'} = R^{5'} = R^{6'}$ = -$CH_3$.

Als beispielhafte Vertreter erfindungsgemäß geeigneter stabiler N-Oxyl-Radikale seien

2,2,6,6-Tetramethyl-1-oxyl-piperidin (TEMPO),
4-Oxo-2,2,6,6-tetramethyl-1-oxyl-piperidin (4-Oxo-TEMPO),
2,2,5,5-Tetramethyl-1-oxyl-pyrrolidin,
3-Carboxy-2,2,5,5-tetramethyl-1-oxyl-pyrrolidin,
2,6-Diphenyl-2,6-dimethyl-1-oxyl-piperidin,
4-Hydroxy-2,2,6,6-tetramethyl-1-oxyl-piperidin (4-Hydroxy-TEMPO),
2,5-Diphenyl-2,5-dimethyl-1-oxyl-pyrrolidin,
Di-tert.-butylnitroxid,
2,2,5-Trimethyl-4-phenyl-3-azahexan-3-oxy,
1-Hydroxy-2,2,5-trimethyl-4-phenyl-3-azahexan-3-oxy,
N-tert-Butyl-1-phenyl-2-methylpropylnitroxid,
N-tert-Butyl-1-(2-naphthyl)-2-methylpropylnitroxid,
N-tert-Butyl-1-diethylphosphono-2,2-dimethylpropylnitroxid,
N-tert-Butyl-1-dibenzylphosphono-2,2-dimethylpropylnitroxid,
N-Phenyl-1-diethylphosphono-2,2-dimethylpropylnitroxid,
N-Phenyl-1-diethylphosphono-1-methylethylnitroxid, und
N-(1-Phenyl-2-methylpropyl)-1-diethylphosphono-1-methylethylnitroxid genannt.

Die Verbindungen (VI) und (VII) können gemäß US-A 4665185 (z.B. Bsp. 7) sowie DE-A 19510184 erhalten werden.

Besonders bevorzugt werden N-Oxyl-Radikale eingesetzt, die gegenüber TEMPO oder 4-Oxo-TEMPO eine niedrigere Bindungsdissoziationsenthalpie zum wachsenden, radikalischen Kettenende aufweisen. Dies sind z.B. die Verbindungen der bereits genannten Formel (X) und (XI).

Weitere geeignete beispielhafte Vertreter sind:

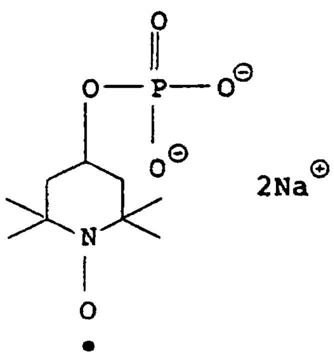

Sunamoto, Junzo; Akiyoshi, Kuzunari, Kihara, Tetsuji; Endo, Masayuki, BCS JA 8, Bull, Chem. Soc. Jpn., EN, 65, 4, 1992, S. 1041 - 1046;

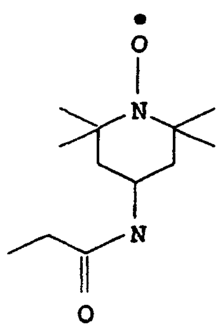

Beilstein Registry Number 6926369 ($C_{11}H_{22}N_3O_2$);

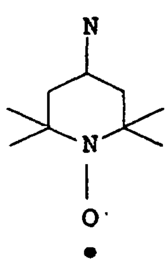

Beilstein Registry Number 6498805 (4-Amino-2,2,6,6-tetramethyl-1-oxyl-piperidin);

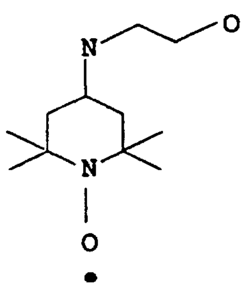

Beilstein Registry Number 6800244 ($C_{11}H_{23}N_2O_2$);

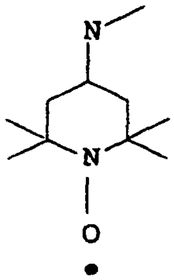

Beilstein Registry Number 5730772 (N-Methyl-4-amino-2,2,6,6-tetramethyl-1-oxyl-piperidin;

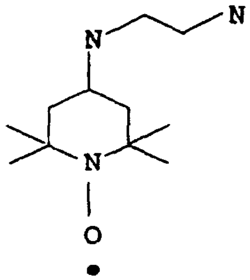

Beilstein Registry Number 5507538 (2,2,6,6-Tetramethyl-4-(2-aminoethylamino)-1-oxyl-piperidin);

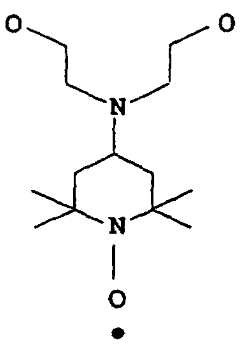

Beilstein Registry Number 4417950 (4<Bis(2-hydroxyethyl)>-amino-2,2,6,6-tetramethyl-1-oxyl-piperidin);

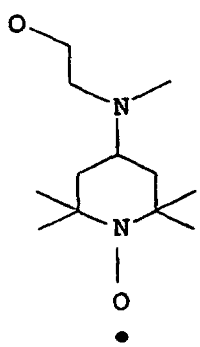

Beilstein Registry Number 4396625 ($C_{12}H_{25}N_2O_2$);

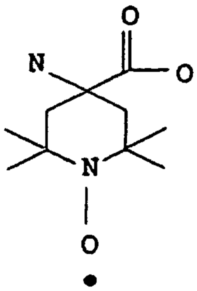

Beilstein Registry Number 4139900 (4-Amino-2,2,6,6-tetra-methyl-4-carboxy-1-oxyl-piperidin);

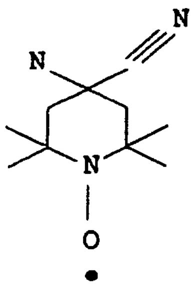

Beilstein Registry Number 4137088 (4-Amino-4-cyano-2,2,6,6-tetra-methyl-1-oxyl-piperidin);

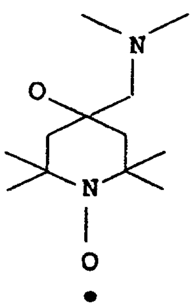

Beilstein Registry Number 3942714 ($C_{12}H_{25}N_2O_2$);

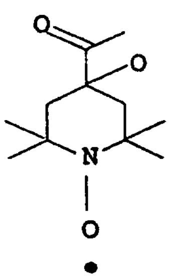

Beilstein Registry Number 1468515 (2,2,6,6-Tetramethyl-4-hydroxy-4-acetyl-1-oxyl-piperidin);

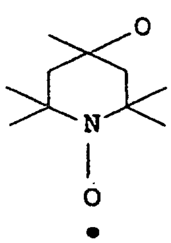

Beilstein Registry Number 1423410 (2,2,4,6,6-Pentamethyl-4-hydroxy-1-oxyl-piperidin);

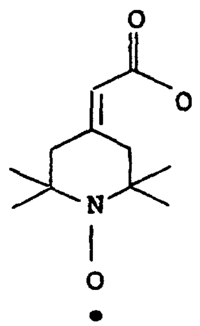

Beilstein Registry Number 6205316 (4-Carboxymethylen-2,2,6,6-tetra-methyl-1-oxyl-piperidin);

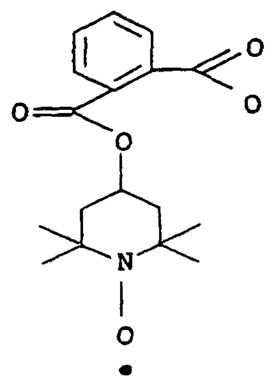

Beilstein Registry Number 1395538 (4-<2-Carboxy-benzoyloxy>-2,2,6,6-tetramethyl-1-oxyl-piperidin);

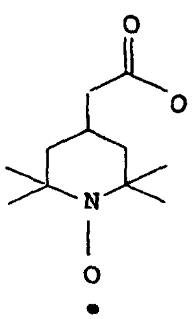

Beilstein Registry Number 3546230 (4-Carboxymethyl-2,2,6,6-tetra-methyl-1-oxyl-piperidin);

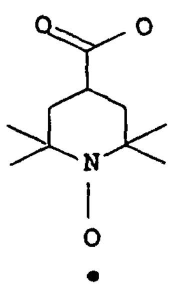

Beilstein Registry Number 3949026 (4-Carboxyl-2,2,6,6-tetra-methyl-1-oxyl-piperidin);

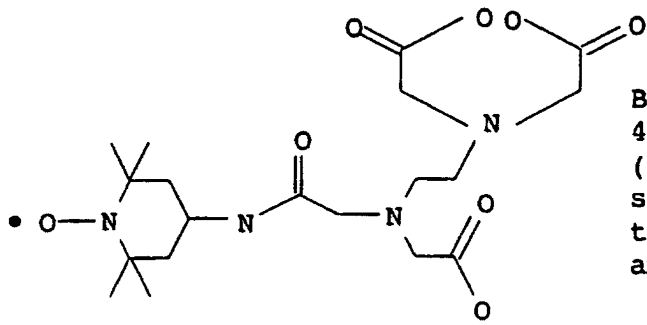

Beilstein Registry Number 4611003 (Ethylendiamintetraessigsäuremono(1-oxy-2,2,6,6-tetramethylpiperidinyl-4-amid);

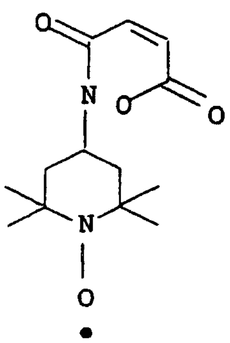

Beilstein Registry Number 5961636 ($C_{13}H_{21}N_2O_4$)

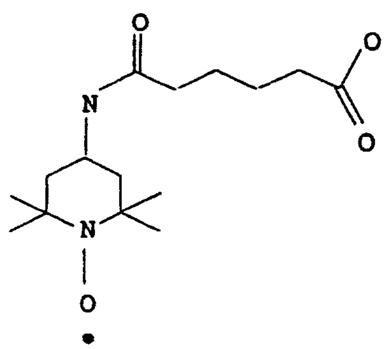

Beilstein Registry Number 5592232 ($C_{15}H_{27}N_2O_4$);

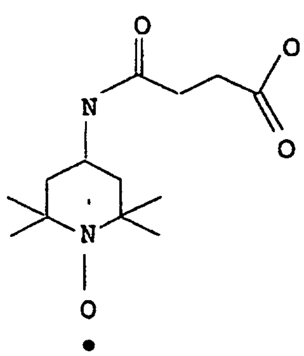

Beilstein Registry Number 5080576 (Bernsteinsäure-N-(2,2,6,6-tetramethyl-1-oxyl-4-piperidinyl)-monoamid);

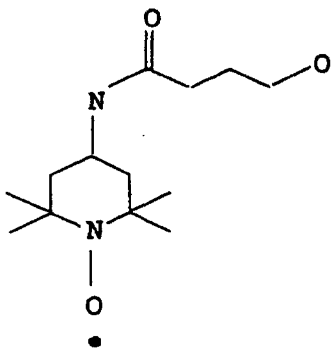

Beilstein Registry Number 5051814 (4-(4-Hydroxybutanoylamino)-2,2,6,6-tetramethyl-1-oxyl-piperidin);

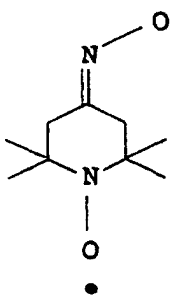

Beilstein Registry Number 4677496 (2,2,6,6-Tetramethyl-4-oximino-1-oxyl-piperidin);

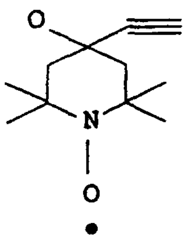

Beilstein Registry Number 1451068 ($C_{11}H_{18}NO_2$);

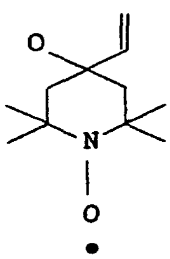

Beilstein Registry Number 1451075 ($C_{11}H_{20}NO_2$);

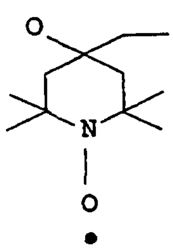

Beilstein Registry Number 1423698 (4-Ethyl-4-hydroxy-2,2,6,6-tetra-methyl-1-oxyl-piperidin);

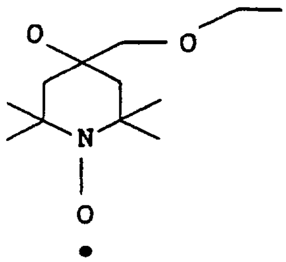

Beilstein Registry Number 5509793 (4-Ethoxymethyl-4-hydroxy-2,2,6,6 -tetramethyl-1-oxyl-piperidin);

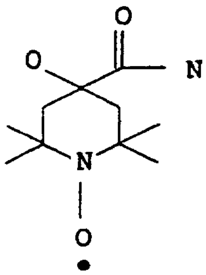

Beilstein Registry Number 3960373 ($C_{10}H_{19}N_2O_3$);

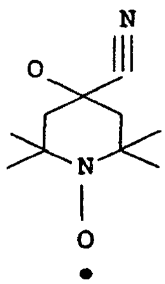

Beilstein Registry Number ($C_{10}H_{17}N_2O_2$);

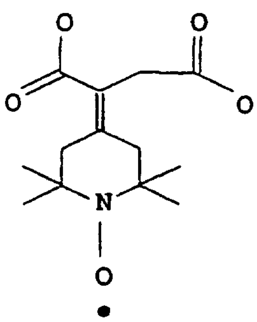

Beilstein Registry Number 3985130 (2,2,6,6-Tetramethyl-1-oxyl-4-piperidyliden)-bernsteinsäure);

Selbstverständlich können erfindungsgemäß auch Gemische von stabilen N-Oxyl-Radikalen angewendet werden.

Das stabile N-Oxylradikal kann je nach seinem Löslichkeitsverhalten entweder als solches, oder gelöst in organischen Lösungsmitteln wie Alkoholen, z.B. Methanol und/oder Ethanol, aber auch Ethylacetat und/oder Dimethylformamid zugegeben werden.

Das molare Verhältnis zwischen stabilen N-Oxyl-Radikalen und radikalischem Polymerisationsinitiator beträgt im Rahmen des erfindungsgemäßen Verfahrens normalerweise 0,5:1 bis 5:1, bevorzugt 0,8:1 bis 4:1.

Durch Zugabe von organischen Säuren wie Camphersulfonsäure oder p-Toluolsulfonsäure (US-A 5,322,912) oder durch Zugabe von Dimethylsulfoxid (US-A 5,412,047) oder 2-Fluor-1-methylpyridinium-p-toluolsulfonat (Macromolecules 28, 8453 ff (1995)) bzw. Indonylessigsäure zum Polymerisationsgemisch kann die Polymerisationsgeschwindigkeit des erfindungsgemäßen Verfahrens in der Regel erhöht werden.

Das erfindungsgemäße Verfahren wird üblicherweise bei einem Absolutdruck im Bereich von Normaldruck

bis 60 bar, bevorzugt 2 bis 45 bar, und einer Temperatur von 70 bis 170°C, bevorzugt 80 bis 150°C, durchgeführt.

Die Dauer der Polymerisation wählt man vorzugsweise so, daß das gewünschte Molekulargewicht erreicht wird. Üblicherweise beträgt die Dauer 1 Stunde bis 6 Tage.

Die nach dem erfindungsgemäßen Verfahren erhältlichen Blockcopolymeren können als solche verwendet werden oder mit anderen Polymeren und/oder Zusatzstoffen abgemischt werden.

Solche anderen Polymere sind insbesondere thermoplastische Polymere. Zu solchen Polymeren zählen Polyester wie Polyethylenterephthalat und Polybutylenterephthalat, Polycarbonate, Polyamide, Polyoxymethylen, Polystyrol, Polyolefine wie Polyethylen und Polypropylen, Polyvinylchlorid und Styrolcopolymere wie Polystyrolacrylnitril.

Die Menge der anderen Polymere beträgt üblicherweise 0 bis 99 Gew.-%, bevorzugt 0 bis 90 Gew.-%, bezogen auf die Summe aus Blockcopolymeren und anderen Polymeren.

Als Zusatzstoffe kommen übliche Zusatzstoffe, wie z.B. Gleitoder Entformungsmittel, Pigmente, Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen, in Betracht.

Geeignete Gleit- und Entformungsmittel sind z.B. Fettsäuren wie etwa Stearinsäuren, Stearylalkohol, Fettsäureester mit 6-20 C-Atomen wie z.B. Stearinsäureester, Metallsalze der Fettsäuren wie z.B. Ca-, Al-, Zn-stearat, Fettsäureamide wie Stearinsäureamide, sowie Siliconöle, Montanwachse und solche auf Basis von Polyethylen und Polypropylen, weiterhin Kohlenwasserstoff-Öle, Paraffine und Carbonsäureester aus langkettigen Carbonsäuren und Ethanol, Fettalkoholen, Glycerin, Ethandiol, Pentaerythrit oder anderen Alkoholen.

Pigmente sind beispielsweise Titandioxid, Phthalocyanine, Ultramarinblau, Eisenoxide oder Ruß, sowie die Klasse der organischen Pigmente.

Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien (Wärmestabilisatoren) sind etwa sterisch gehinderte Phenole, Hydrochinone, verschiedene substituierte Vertreter dieser Gruppe, sowie deren Mischungen. Sie sind etwa als Topanol® oder Irganox® im Handel erhältlich.

Geeignete Stabilisatoren gegen Lichteinwirkung sind z.B. verschiedene substituierte Resorcine, Salicylate, Benzotriazole, Zimtsäureverbindungen, organische Phosphite und Phosphonite, Benzophenone, HALS (Hindered Amine Light Stabilizers), wie sie z.B. als Tinuvin® kommerziell erhältlich sind.

Als Stabilisatoren können ebenso Ester und/oder Amide der b-(3,5-di-tert.-butyl-4-hydroxyphenyl-propionsäure und/oder Benztriazole eingesetzt werden. Beispielhaft sind mögliche Antioxidantien in EP-A 698637 und EP-A 669367 erwähnt. Insbesondere kann man als phenolische Antioxidantien 2,6-Di-tert.-butyl-4-methylphenol, Pentaerythrityl-tetrakis-[3-(3,5-di-tert.-butyl-4-hydroxyphenyl)-propionat und N,N'-Di-(3,5-di-tert.-butyl-4-hydroxyphenyl-propionyl)-hexamethylendiamin verwenden.

Die genannten Stabilisatoren können einzeln oder in Mischung verwendet werden.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester und Glycerinmono- und -distearate, sowie deren Mischungen.

Die einzelnen Zusatzstoffe werden in den jeweils üblichen Mengen verwendet. Üblicherweise verwendet man die Zusatstoffe in einer Menge von 0 bis 50 Gew.-%, bezogen auf die Summe aus Blockcopolymeren und Zusatzstoffen.

Die Abmischung der Blockcopolymere mit den anderen Polymeren und/oder den Zusatzstoffen erfolgt kontinuierlich oder diskontinuierlich nach an sich bekannten Mischverfahren, beispielsweise unter Aufschmelzen in einem Extruder, Banbury-Mischer, Kneter, Walzenstuhl oder Kalander. Die Komponenten können jedoch auch "kalt" vermischt werden und das Gemisch wird erst bei der verarbeitung aufgeschmolzen und homogenisiert. Üblicherweise erfolgt das Vermischen bei Temperaturen von 130 bis 350°C, bevorzugt 160 bis 280°C, insbesondere 190 bis 240°C. Die Verwendung von Entgasungsvorrichtungen ist bevorzugt.

Bevorzugt erfolgt die Abmischung in einem üblichen Extruder, wobei die Komponenten gemischt oder einzeln beispielsweise vollständig über einen Trichter in den Extruder eingeführt oder auch anteilig an späterer Stelle des

Extruders zum geschmolzenen oder festen, im Extruder befindlichen Produkt eingeführt werden können.

Die erhaltenen Mischungen können beispielsweise pelletiert oder granuliert, oder nach allgemein bekannten Verfahren, beispielsweise durch Extrusion, Spritzguß, Aufschäumen mit Treibmitteln, oder Kalandrierung verarbeitet werden.

Das erfindungsgemäße Verfahren zeichnet sich durch einfache Handhabung auch bei großtechnischer Anwendung aus, da anders als im Stand der Technik kein strikter Feuchtigkeitsausschluß erforderlich ist.

Die nach dem Verfahren erhaltenen Blockcopolymere zeichnen sich durch geringe Polydispersitäten, sowie ausgewogene mechanische Eigenschaften, insbesondere durch hohe Zähigkeiten bei niedrigem Diengehalt aus. Ihr Molekulargewicht lässt sich exakt einstellen. Sie lassen sich im Spritzguß oder in Extrusion einfach verarbeiten und die Formteile, Folien und Schäume zeigen keine unerwünschten Stippen.

Beispiele:

Styrol wurde vor der Verwendung durch Destillation gereinigt. Wasser wurde deionisiert. Dibenzoylperoxid wurde 75 gew.-%ig, Natriumdioctylsulfosuccinat als 50 gew.-%ige wässrige Lösung verwendet. K30 ist ein Emulgatorsystem (Fa. Bayer AG) auf Basis von Natriumsalzen von $C_{10}$-$C_{18}$-Alkansulfonsäuren und wurde als 40 gew.-%ige wässrige Lösung verwendet.

Die nachfolgenden Gramm-Angaben beziehen sich immer auf die jeweilige Lösung (nicht auf den Reinstoff).

Die Molmassen, nämlich das Zahlenmittel $\overline{M}_n$ und das Gewichtsmittel $\overline{M}_w$, wurden durch Gelpermeationschromatographie in Tetrahydrofuran bestimmt. Als Eichstandard wurde Polystyrol verwendet. Die Glasübergangstemperatur Tg wurde mit Differential Scanning Calorimetry (DSC) bestimmt (Starttemperatur -110°C, Endtemperatur 150°C, Heizrate 20°C/min).

Es wurden folgende stabile N-Oxyl-Radikale I bis IV verwendet:

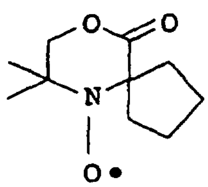

I

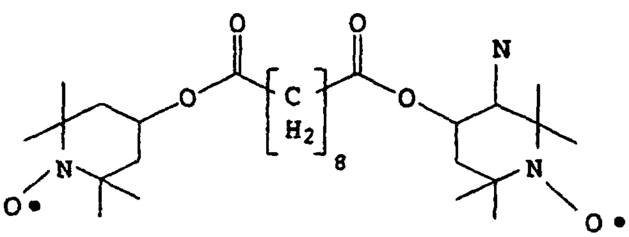

II

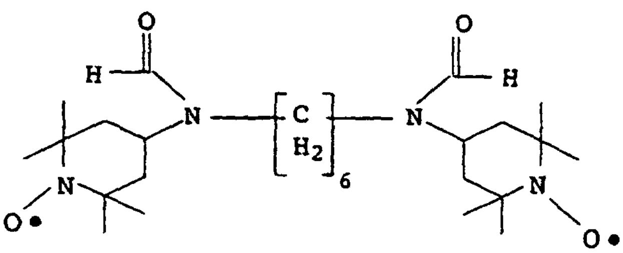

III

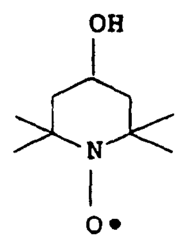

IV

Die Beispiele 1 - 8 illustrieren das Verfahren in wasserhaltigen Systemen, Beispiel 9 in einem organischen Lösungsmittel.

Beispiel 1 und allgemeine versuchsvorschrift für Bsp. 2-8, Teil a)

a) Eine Mischung aus

| | |
|---|---|
| 0,468 g | des Radikals I, |
| 0,350 g | Dibenzoylperoxid, |
| 10,0 g | Styrol, |
| 2,17 g | Hexadecan, |
| 2,17 g | Na-dioctylsulfosuccinat, |
| 470,4 g | Wasser |

wurde unter Rühren in einem Ultraschallbad (Fa. Dr. Hilscher, Modell UP 40005) zunächst 5 min bei 25% Leistung und danach 20 min bei 100 % Leistung behandelt. Die erhaltene Miniemulsion wurde mit 0 g K 30 versetzt und in einem Büchi-Metallreaktor eingesaugt. Der Reaktor wurde verschlossen und 5 bar Stickstoffgas aufgepreßt und anschließend evakuiert. Dieses Spülen mit $N_2$ wurde noch 4 mal wiederholt.

b) In den evakuierten Reaktor wurden 98,6 g gasförmiges Butadien eingepresst, wonach auf 130°C aufgeheizt und 11 Stunden polymerisiert wurde. Danach wurde eine Probe genommen.

Beispiel 2

a) Es wurde wie in Bsp. 1, Teil a) verfahren, wobei

| | |
|---|---|
| 0,893 g | des Radikals IV, |
| 0,843 g | Dibenzoylperoxid, |
| 171,9 g | Styrol, |
| 5,2 g | Hexadecan, |
| 5,2 g | Na-dioctylsulfosuccinat, |
| 390,0 g | Wasser |
| 6,53 g | K 30 |

verwendet wurden.

b) In den evakuierten Reaktor wurden 89,3 g gasförmiges Butadien eingepresst, wonach auf 130°C aufgeheizt und 17 Stunden polymerisiert wurde. Danach wurde eine Probe genommen.

Beispiel 3

a) Es wurde wie in Bsp. 1, Teil a) verfahren, wobei

| | |
|---|---|
| 1,237 g | des Radikals IV, |
| 1,167 g | Dibenzoylperoxid, |
| 238,1 g | Styrol, |
| 7,23 g | Hexadecan, |
| 7,23 g | Na-dioctylsulfosuccinat, |
| 540,0 g | Wasser |
| 9,04 g | K 30 |

verwendet wurden.

b) Der evakuierte Reaktor wurde auf 130°C aufgeheizt und es wurde 6 Stunden polymerisiert. Danach wurde eine eine Probe genommen, der Druck auf 2 bar entspannt und 123,6 g Butadien eingepresst. Es wurde weitere 17 Stunden polymerisiert, wonach eine Probe genommen wurde.

Beispiel 4

a) Es wurde wie in Bsp. 1, Teil a) verfahren, wobei

| | |
|---|---|
| 0,815 g | des Radikals IV, |
| 0,769 g | Dibenzoylperoxid, |
| 156,9 g | Styrol, |
| 4,77 g | Hexadecan, |
| 4,77 g | Na-dioctylsulfosuccinat, |
| 667,5 g | Wasser |
| 5,96 g | K 30 |

verwendet wurden.

b) Der evakuierte Reaktor wurde auf 130°C aufgeheizt und es wurde 5 Stunden polymerisiert. Es wurde eine Probe genommen. Danach wurde der Druck auf 1,9 bar entspannt und eine Lösung von 5,96 g K 30 und 0,481 g t-Dodecylmercaptan in 60 g Wasser zugegeben und 81,4 g gasförmiges Butadien eingepresst. Es wurde weitere 16 Stunden polymerisiert, wonach eine Probe genommen wurde.

Beispiel 5

a) Es wurde wie in Bsp. 1, Teil a) verfahren, wobei

| | |
|---|---|
| 0,941 g | des Radikals IV, |
| 0,887 g | Dibenzoylperoxid, |
| 181,0 g | Styrol, |
| 5,50 g | Hexadecan, |
| 5,50 g | Na-dioctylsulfosuccinat, |
| 645,5 g | Wasser, |
| 6,88 g | K 30 |

verwendet wurden.

b) Der evakuierte Reaktor wurde auf 130°C aufgeheizt und es wurde 3 Stunden polymerisiert. Danach wurde eine Probe genommen. Danach wurde der Druck auf 2 bar entspannt und 94,0 g Butadien eingepresst. Es wurde weitere 17 Stunden polymerisiert, wonach eine Probe genommen wurde.

Beispiel 6

a) Es wurde wie in Bsp. 1, Teil a) verfahren, wobei

| | |
|---|---|
| 0,804 g | des Radikals IV, |
| 0,758 g | Dibenzoylperoxid, |
| 154,7 g | Styrol, |
| 4,7 g | Hexadecan, |
| 4,7 g | Na-dioctylsulfosuccinat, |
| 516,1 g | Wasser, |
| 11,75 g | K 30 gelöst in 200 g Wasser |

verwendet wurden.

b) Es wurde wie in Bsp. 5, Teil b) verfahren, wobei 80,3 g Butadien eingepresst wurden.

Beispiel 7

a) Es wurde wie in Bsp. 1, Teil a) verfahren, wobei

| | |
|---|---|
| 1,517 g | des Radikals II, |
| 0,872 g | Dibenzoylperoxid, |
| 0,546 g | tert.-Dodecylmercaptan, |
| 151,8 g | Styrol, |
| 5,35 g | Hexadecan, |
| 5,35 g | Na-dioctylsulfosuccinat, |
| 623 g | Wasser, |
| 6,68 g | K 30 |

verwendet wurden.

b) Der evakuierte Reaktor wurde auf 130°C aufgeheizt und es wurde 90 min polymerisiert. Danach wurde eine Probe genommen. Danach wurde der Druck auf 2 bar entspannt und 71,0 g Butadien eingepresst. Es wurde weitere 6 Stunden polymerisiert, auf 70° abkühlen gelassen und das Butadien ausströmen gelassen. Es wurde eine Probe genommen.

Beispiel 8

a) Es wurde wie in Bsp. 1, Teil a) verfahren, wobei

| | |
|---|---|
| 1,340 g | des Radikals III, gelöst in 14,83 g Methanol, |
| 0,870 g | Dibenzoylperoxid, |
| 0,544 g | tert.-Dodecylmercaptan, |
| 151,8 g | Styrol, |
| 5,40 g | Hexadecan, |
| 5,42 g | Na-dioctylsulfosuccinat, |
| 621 g | Wasser, |
| 6,7 g | K 30 |

verwendet wurden.

b) Der evakuierte Reaktor wurde auf 130°C aufgeheizt und es wurde 90 min polymerisiert. Es wurde eine Probe genommen. Danach wurde der Druck auf 2 bar entspannt und 80,1 g Butadien eingepresst. Es wurde weitere 6 Stunden polymerisiert, wonach eine Probe gezogen wurde.

Die Tabelle fasst die Meßergebnisse zusammen (n. b. nicht bestimmt):

| Bsp. | Radikal | Zeitpunkt der Probenahme[1)] | Umsatz | $\bar{M}_n$ [g/mol] | PDI | Tg [°C] |
|---|---|---|---|---|---|---|
| 1 | I | nach B/S | 21 % | 19 000 | 2,2 | -1 |
| 2 | IV | nach BIS | 52 % | 35 800 | 1,7 | 7 |

[1)] "nach S" = nach der Polymerisation des Styrolblocks
"nach B/S" = nach der Polymerisation des Butadien/Styrolblocks

(fortgesetzt)

| Bsp. | Radikal | Zeitpunkt der Probenahme[1)] | Umsatz | $\overline{M}_n$ [g/mol] | PDI | Tg [°C] |
|---|---|---|---|---|---|---|
| 3 | IV | nach S<br>nach B/S | 58 %<br>64 % | 20 000<br>30 400 | 1,3<br>1,6 | n.b. |
| 4 | IV | nach S<br>nach B/S | 50 %<br>59 % | 17 300<br>25 200 | 1,3<br>1,7 | <br>-5/98 |
| 5 | IV | nach S<br>nach B/S | 20 %<br>59 % | 13 400<br>36 500 | 1,3<br>1,7 | n.b. |
| 6 | IV | nach S<br>nach B/S | 26 %<br>56 % | 10 300<br>40 800 | 1,2<br>1,6 | n.b. |
| 7 | II | nach S<br>nach B/S | 61 %<br>n.b. | 20 000<br>29 400 | 2,1<br>2,4 | n.b. |
| 8 | III | nach S<br>nach B/S | 35 %<br>45 % | 10 900<br>24 800 | 1,9<br>1,9 | n.b. |

1) "nach S" = nach der Polymerisation des Styrolblocks
"nach B/S" = nach der Polymerisation des Butadien/Styrolblocks

Beispiel 9

Es wurden

| | |
|---|---|
| 0,938 g | 2,2,6,6-Tetramethyl-1-oxyl-piperidin (TEMPO), |
| 1,592 g | Dibenzoylperoxid |
| 360,0 g | Styrol |

in 1000 ml Cyclohexan gelöst und in einen Büchi-Metallreaktor, der zuvor wie in Bsp. 1, Teil a) beschrieben mit $N_2$ gespült und evakuiert worden war, auf 95°C erwärmt. Nach 1 Stunde wurde die Temperatur auf 130°C erhöht und 28 Stunden polymerisiert.

Das Produkt wurde durch Eingießen in die 10-fache Menge Methanol ausgefällt. Man erhielt ein Polystyrol mit einer mittleren Molmasse $\overline{M}_n$ 25 200 g/mol und einem PDI 1,49.

225 g dieses Polystyrols wurden in einem mit $N_2$ gespülten und evakuierten Büchi-Metallreaktor in 1000 ml Cyclohexan gelöst und mit 208,3 g Styrol und 108,0 g Butadien versetzt. Danach wurde 23 Stunden bei 130°C polymerisiert. Es wurde eine Lösung von 0,5 g tert.-Dodecylmercaptan in 20 g Cyclohexan zugefügt und weitere 27 Stunden bei 130°C polymerisiert.

Das erhaltene Polymere hatte eine mittlere Molmasse $\overline{M}_w$ von 74 700 g/mol. Die Glasübergangstemperatur Tg der Hartphase (Styrol) betrug +96°C, die Tg der Weichphase betrug -13°C.

Die Beispiele belegen, daß das erfindungsgemäße Verfahren nicht nur unempfindlich gegen Feuchtigkeit ist, sondern sich im Gegenteil mit Wasser als Reaktionsmedium auf einfache Weise durchführen lässt (Bsp. 1-8).

## Patentansprüche

**1.** Verfahren zur Herstellung eines kautschukelastischen Blockcopolymerisates aus
mindestens einem Block A, der aus vinylaromatischen Monomeren aufgebaut ist,
und/oder
mindestens einem Block B, der aus Dienmonomeren aufgebaut ist,
und
mindestens einem Block B/A, der aus vinylaromatischen Monomeren und aus Dienmonomeren aufgebaut ist,
**dadurch gekennzeichnet, daß** die Monomeren unter Verwendung mindestens eines radikalischen Polymerisationsinitiators durch kontrollierte radikalische Polymerisation in Gegenwart eines kontrolliert radikalisch polymerisierenden Systems polymerisiert werden.

**2.** Verfahren nach Anspruch 1, **dadurch gekennzeichnet, daß** das vinylaromatische Monomere ausgewählt ist aus Styrol, $\alpha$-Methylstyrol, Vinyltoluol und Diphenylethylen und das Dien aus Butadien und Isopren.

**3.** Verfahren nach Anspruch 1 und 2, **dadurch gekennzeichnet, daß** der Block B/A ein statistisches Copolymerisat des vinylaromatischen Monomeren mit dem Dien ist.

**4.** Verfahren nach den Ansprüchen 1 bis 3, **dadurch gekennzeichnet, daß** die kontrollierte radikalische Polymerisation durchgeführt wird nach einer der folgenden Methoden:

- Atom Transfer Radical Polymerization (ATRP)
- Verwendung von Triazolinyl-Verbindungen
- katalytischer Kettentransfer (Catalytic Chain Transfer, CCT)
- Reversible Addition Fragmentation Chain Transfer (RAFT)
- Initiator-Transfer-Termination (Iniferter)
- Stable Free Radical Polymerization (SFRP).

**5.** Verfahren nach Anspruch 4, **dadurch gekennzeichnet, daß** die kontrollierte radikalische Polymerisation nach der SFRP-Methode durchgeführt wird, wozu mindestens ein stabiles N-Oxyl-Radikal mitverwendet wird.

**6.** Verfahren nach Anspruch 5, **dadurch gekennzeichnet, daß** als stabiles N-Oxyl-Radikal eine Verbindung der allgemeinen Formel I

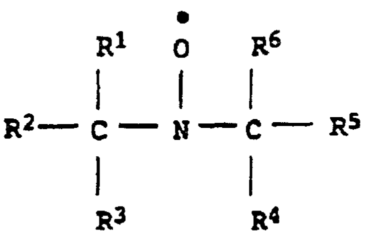

(I),

mit

$R^1$,$R^2$,$R^5$,$R^6$ = dieselbe oder verschiedene gerad- oder verzweigtkettige, gegebenenfalls substituierte Alkylgruppen, Cycloalkylgruppen, Aralkylgruppen oder Arylgruppen und

$R^3$, $R^4$ = dieselben oder verschiedene gerad- oder verzweigtkettige, gegebenenfalls substituierte Alkylgruppen oder

$R^3CNCR^4$ = einen Teil einer zyklischen Struktur mit einem gegebenenfalls ankondensierten anderen gesättigten oder aromatischen Ring, wobei die zyklische Struktur oder der aromatische Ring gegebenenfalls substituiert sind, verwendet wird

**7.** Verfahren nach den Ansprüchen 5 und 6, **dadurch gekennzeichnet, daß** als stabiles N-Oxyl-Radikal eine Verbindung der nachstehenden allgemeinen Formeln II bis XI verwendet wird:

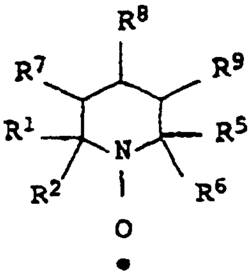

(II),

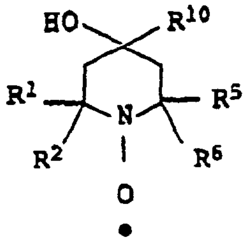

(III),

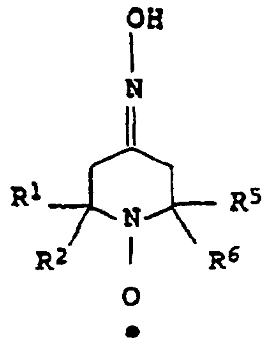

(IV),

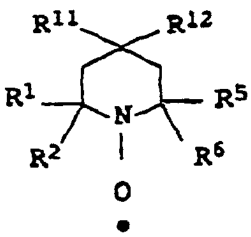

(V),

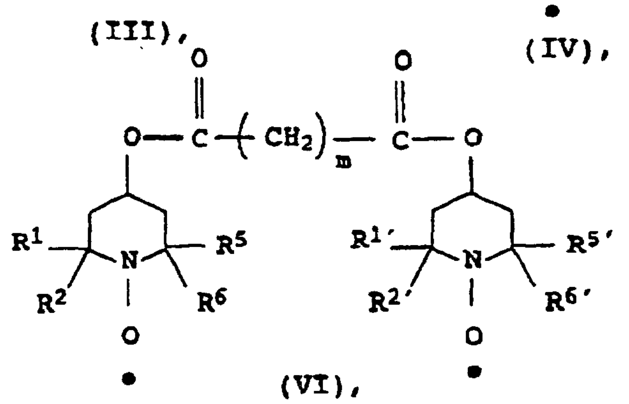

(VI),

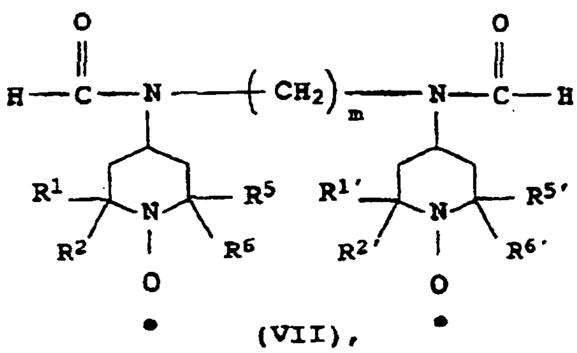

(VII),

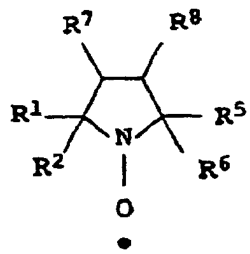

(VIII),

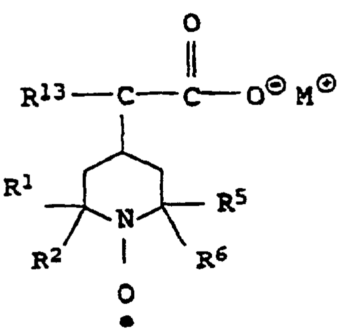

(IX),

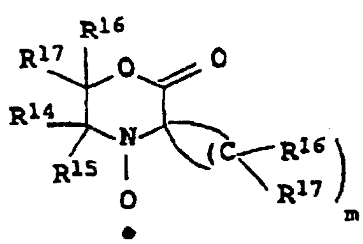

(X),

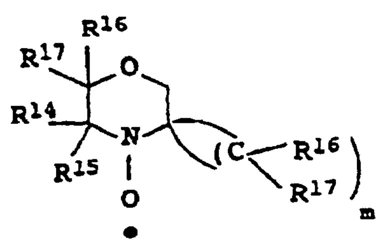

(XI)

mit

m = 2 bis 10,

$R^7$,$R^8$,$R^9$ = unabhängig voneinander

—H,

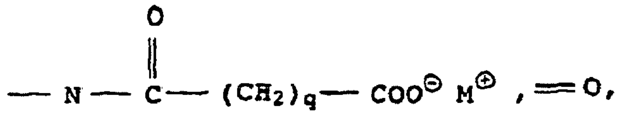

—$NH_2$,

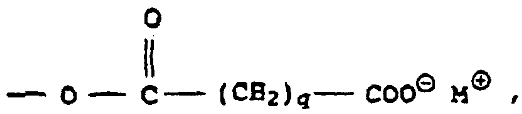

—$COO^{\ominus}$ $M^{\oplus}$, —$SO_3^{\ominus}M^{\oplus}$, —$PO_3^{\ominus}$ $M^{\oplus}$,
— O—$PO_3^{2\ominus}$ $M_2^{\oplus}$, —O—$SO_3^{\ominus}$ $M^{\oplus}$, —OH,

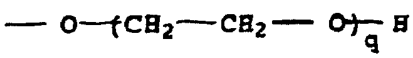

oder

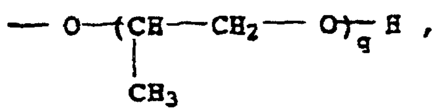

| | |
|---|---|
| $M^{\oplus}$ = | Wasserstoff- oder ein Alkalimetallion, |
| q = | eine ganze Zahl von 1 bis 100, |
| $R^1$, $R^2$, $R^5$, $R^6$ = | unabhängig voneinander dieselbe oder verschiedene gerad- oder verzweigtkettige, gegebenenfalls substituierte Alkylgruppen, |
| $R^{1'}$, $R^{2'}$, $R^{5'}$, $R^{6'}$, = | unabhängig voneinander und unabhängig von $R^1$, $R^2$, $R^5$, $R^6$ dieselben Gruppen wie $R^1$ |
| $R^{10}$ = | -H, $C_1$- bis $C_4$-Alkyl, -CH=$CH_2$, -C≡CH, -CN, 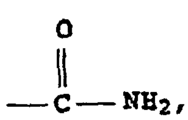 -$COO^{\ominus}$ $M^{\oplus}$, -$COOCH_3$ oder -$COOC_2H_5$, |
| $R^{11}$ = | ein organischer Rest, der wenigstens eine primäre, sekundäre oder tertiäre Aminogruppe oder wenigstens eine Ammoaiumgruppe aufweist, |
| $R^{12}$ = | unabhängig von $R^{11}$ dieselben Gruppen wie $R^{11}$ oder -H, -OH, $C_1$- bis $C_4$-Alkyl, -$COO^{\ominus}M^{\oplus}$, -C≡CH, |

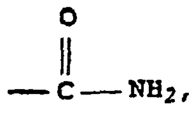, 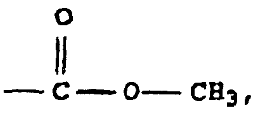, 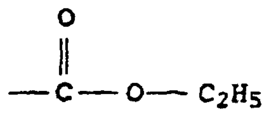

hydroxysubstituiertes $C_1$- bis $C_4$-Alkyl,

$R^{13}$ = —H, —$CH_3$ oder

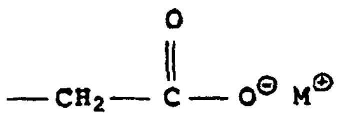,

$R^{14}$, $R^{15}$ unabhängig voneinander dieselbe oder verschiedene gerad- oder verzweigtkettige, gegebenenfalls substituierte Alkylgruppen oder Cycloalkylgruppen, oder gegebenenfalls substituierte $C_6$-$C_{20}$-Arylgruppen und

$R^{16}$,$R^{17}$ unabhängig voneinander Wasserstoff oder dieselben Gruppen wie $R^{14}$, $R^{15}$.

**8.** Verfahren nach den Ansprüchen 1 bis 7, **dadurch gekennzeichnet, daß** der radikalische polymerisationsinitiator ausgewählt ist aus der Gruppe bestehend aus Dilaurylperoxid, Dibenzoylperoxid, Cumolhydroperoxid, Dicumylperoxid, Azodiisobutyronitril und Kaliumperoxodisulfat.

**9.** Verfahren nach den Ansprüchen 1 bis 8, **dadurch gekennzeichnet, daß** die Polymerisation gemäß dem Verfahren der Emulsions-, Mikroemulsions-, Miniemulsions-, Suspensions-, Mikrosuspensions-, Minisuspensions-, Fällungs-, Masse- oder Lösungspolymerisation oder gemäß einer Kombination von mindestens zwei der genannten Verfahren vorgenommen wird.

**10.** Verfahren nach den Ansprüchen 1 bis 9, **dadurch gekennzeichnet, dass** die Glasübergangstemperatur Tg des Blocks A über 25 °C und die des Blocks B/A unter 25 °C liegt.

**11.** Blockcopolymerisate, erhältlich nach dem Verfahren gemäß Anspruch 1 bis 10.

**12.** Verwendung der Blockcopolymerisate gemäß Anspruch 11 zur Herstellung von Formkörpern, Folien und schäumen.

**13.** Formkörper, Folien und Schäume, enthaltend die Blockcopolymerisate gemäß Anspruch 11.

## Claims

**1.** A process for the preparation of a rubber-elastic block copolymer of
at least one block A composed of vinylaromatic monomers,
and/or
at least one block B composed of diene monomers,
and
at least one block B/A composed of vinylaromatic monomers and diene monomers,
wherein the monomers are polymerized, using at least one free-radical polymerization initiator, by controlled free-radical polymerization in the presence of a system effecting controlled free-radical polymerization.

**2.** A process as defined in claim 1, wherein the vinylaromatic monomer is selected from the group comprising styrene, α-methylstyrene, vinyl toluene and diphenylethylene and the diene from the group comprising butadiene and isoprene.

**3.** A process as defined in claim 1 and claim 2, wherein the block B/A is a random copolymer of the vinylaromatic

monomer with the diene.

**4.** A process as defined in any of claims 1 to 3, wherein the controlled free-radical polymerization is carried out by one of the following methods:

- Atom transfer radical polymerization (ATRP)
- the use of triazolinyl compounds
- Catalytic chain transfer (CCT)
- Reversible addition fragmentation chain transfer (RAFT)
- Initiator-transfer-termination (Iniferter)
- Stable free radical polymerization (SFRP).

**5.** A process as defined in claim 4, wherein the controlled free-radical polymerization is carried out by the SFRP method, to which end at least one stable N-oxyl radical is co-used.

**6.** A process as defined in claim 5, wherein the stable N-oxyl radical used is a compound of the general formula I

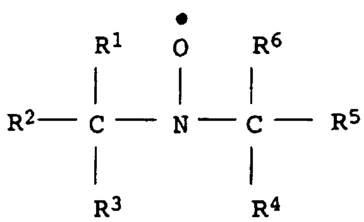

(I),

in which

$R^1$,$R^2$,$R^5$ and $R^6$ denote the same or different straight-chain or branched-chain, optionally substituted alkyl groups, cycloalkyl groups, aralkyl groups or aryl groups and

$R^3$ and $R^4$ denote the same or different straight-chain or branched-chain, optionally substituted alkyl groups or

$R^3CNCR^4$ denotes part of a cyclic structure having a saturated or aromatic ring optionally added thereto by condensation, the cyclic structure or the aromatic ring being optionally substituted.

**7.** A process as defined in claim 5 and claim 6, wherein the stable N-oxyl radical used is a compound of one of the general formulas II to XI below:

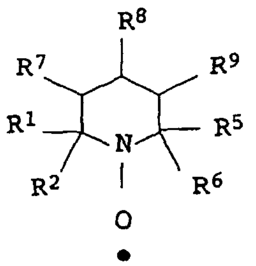
(II),

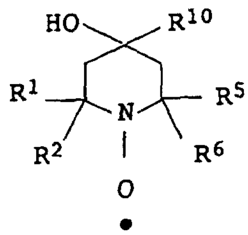
(III),

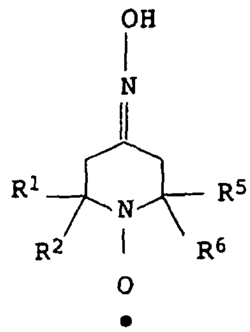
(IV),

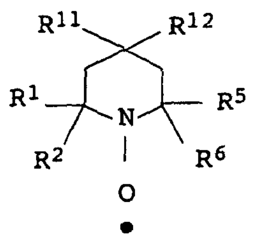
(V),

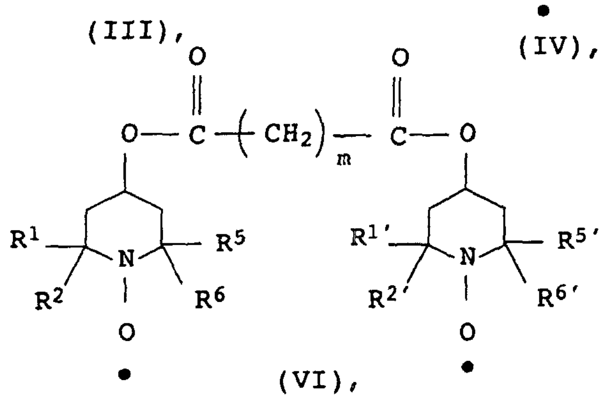
(VI),

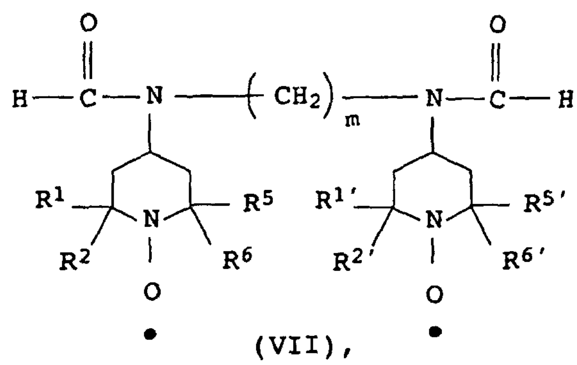
(VII),

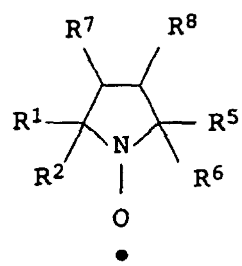
(VIII),

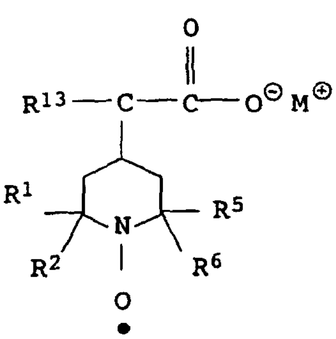
(IX),

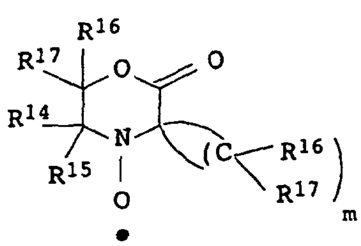
(X),

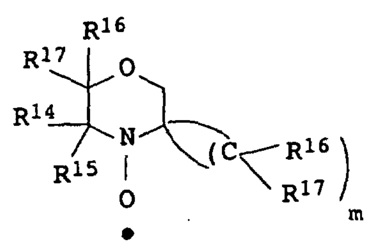
(XI),

in which

| | |
|---|---|
| m | denotes 2 to 10, |
| $R^7$, $R^8$ and $R^9$ | independently denote |

—H,

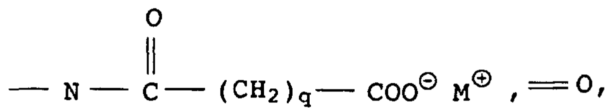

—$NH_2$,

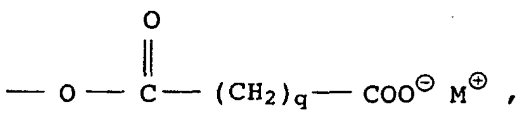

— $COO^{\ominus}$ $M^{\oplus}$, —$SO_3^{\ominus}$ $M^{\oplus}$, —$PO_3^{\ominus}$ $M^{\oplus}$,
—O—$PO_3^{2\ominus}$ $M_2^{\oplus}$, —O—$SO_3^{\ominus}$ $M^{\oplus}$, —OH,

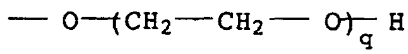

or

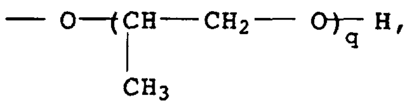

$M^{\oplus}$ denotes a hydrogen ion or an alkali metal ion,

q is an integer from 1 to 100,

$R^1$, $R^2$, $R^5$, $R^6$ independently denote the same or different straight-chain or branched-chain, optionally substituted alkyl groups,

$R^{1'}$, $R^{2'}$, $R^{5'}$ and $R^{6'}$ denote, independently of each other and independently of $R^1$, $R^2$, $R^5$, $R^6$, the same groups as defined for $R^1$,

$R^{10}$ denotes -H, $C_1$-$C_4$ alkyl, -CH=$CH_2$, -C≡CH, -CN,

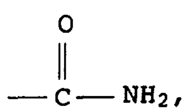

-$COO^{\ominus}$ $M^{\oplus}$ , -$COOCH_3$ or -$COOC_2H_5$,

$R^{11}$ denotes an organic radical containing at least one primary, secondary or tertiary amino group or at least one ammonium group,

$R^{12}$ denotes, independently of $R^{11}$, the same groups as represented by $R^{11}$ or -H, -OH, $C_1$-$C_4$ alkyl, -$COO^{\ominus}M^{\oplus}$, -C≡CH,

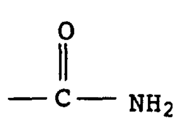,
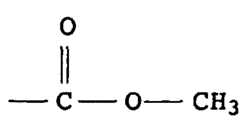,
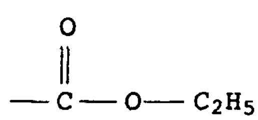

or hydroxy-substituted $C_1$-$C_4$ alkyl,

$R^{13}$ denotes

—H, —$CH_3$ or 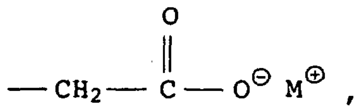

$R^{14}$ and $R^{15}$ independently denote the same or different straight-chain or branched-chain, optionally substituted alkyl groups or cycloalkyl groups, or optionally substituted $C_6$-$C_{20}$ aryl groups and

$R^{16}$ and $R^{17}$ independently denote hydrogen or the same groups as represented by $R^{14}$ and $R^{15}$.

**8.** A process as defined in any of claims 1 to 7, wherein the free-radical polymerization initiator is selected from the group comprising dilauryl peroxide, dibenzoyl peroxide, cumene hydroperoxide, dicumyl peroxide, azodiisobutyronitrile and potassium peroxodisulfate.

**9.** A process as defined in any of claims 1 to 8, wherein polymerization is effected in emulsion, in microemulsion, in mini-emulsion, in suspension, in microsuspension, in minisuspension, in substance, in solution, by precipitation or by a combination of at least two of said methods.

**10.** A process as defined in any of claims 1 to 9, wherein the glass transition temperature Tg of block A is above 25°C and that of block B/A is below 25°C.

**11.** A block copolymer whenever produced by a process as defined in any of claims 1 to 10.

**12.** A method of using a block copolymer as defined in claim 11 for the preparation of shaped articles, films and foams.

**13.** A shaped article, film or foam whenever containing a block copolymer as defined in claim 11.

**Revendications**

**1.** Procédé de préparation d'un copolymère bloc en caoutchouc élastique à partir d'au moins un bloc A qui est formé de monomères vinylaromatiques et/ou
au moins un bloc B qui est formé de monomères de diènes et
au moins un bloc B/A qui est formé de monomères vinylaromatiques et de monomères de diènes,
**caractérisé en ce que** les monomères sont polymérisés au moyen de l'utilisation d'un initiateur de polymérisation radicalaire en présence d'un système de polymérisation radicalaire contrôlée.

**2.** Procédé selon la revendication 1, **caractérisé en ce que** le monomère vinylaromatique est choisi parmi le styrène, $\alpha$-méthylstyrène, le vinyltoluène et le diphenyléthylène et le diène parmi le butadiène et l'isoprène.

**3.** Procédé selon les revendications 1 et 2, **caractérisé en ce que** le bloc B/A est un copolymère statistique du monomère vinylaromatique avec le diène.

**4.** Procédé selon les revendications 1 à 3, **caractérisé en ce que** la polymérisation contrôlée radicalaire est réalisée selon l'une des méthodes suivantes :

- Atom Transfer Radical Polymerization (ATRP)
- utilisation de composés triazolinyles
- transfert de chaînes catalytique (Catalytic Chain Transfer, CCT)
- Reversible Addition Fragmentation Chain Transfer (RAFT)
- Initiator-Transfer-Termination (Iniferter)
- Stable Free Radical Polymerization (SFRP).

**5.** Procédé selon la revendication 4, **caractérisé en ce que** la polymérisation contrôlée radicalaire est réalisée selon la méthode SFRP, dans laquelle au moins un radical N-oxyle stable est utilisé.

6. Procédé selon la revendication 5, **caractérisé en ce que** le radical N-oxyle stable utilisé est un composé de formule générale I :

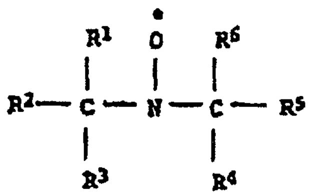

(I),

avec
$R^1$, $R^2$, $R^5$, $R^6$ = des groupes alkyles, cycloalkyles, aralkyles ou aryles substitués le cas échéant à chaînes droites ou ramifiées identiques ou différents et
$R^3$, $R^4$ = des groupes alkyles substitués le cas échéant à chaînes droites ou ramifiées identiques ou différents ou $R^3CNCR^4$ = une partie d'une structure cyclique avec un autre cycle saturé non condensé ou aromatique le cas échéant, la structure cyclique ou le cycle aromatique étant substitué le cas échéant.

7. Procédé selon les revendications 5 et 6, **caractérisé en ce que** le radical N-oxyle stable utilisé est un composé des formules générales II à XI ci-dessous :

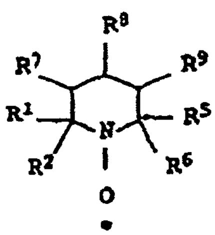

(II),

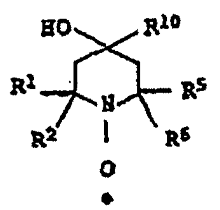

(III),

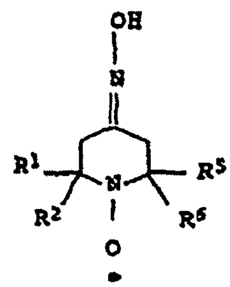

(IV),

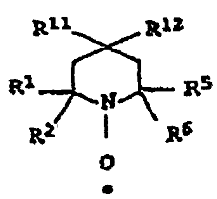

(V),

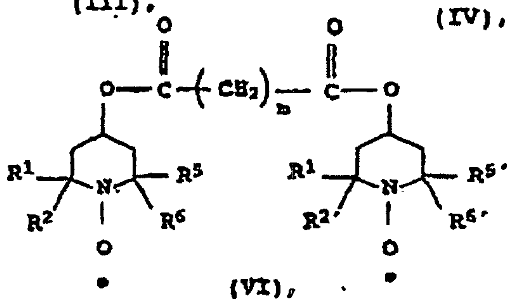

(VI),

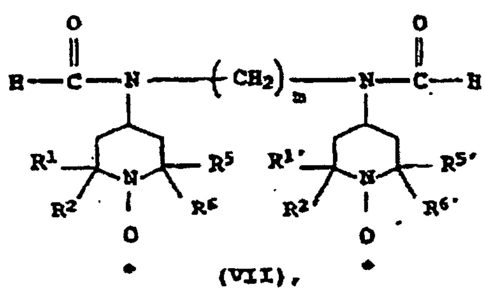

(VII),

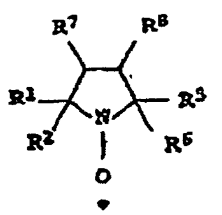

(VIII),

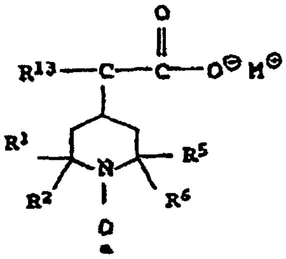
(IX),

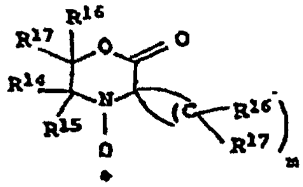
(X),

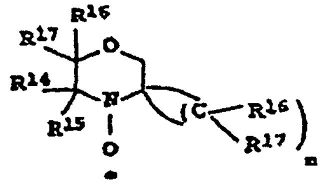
(XI)

avec
m = 2 à 10,
$R^7$, $R^8$, $R^9$ = indépendamment les uns des autres : —H,

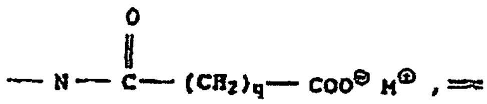
, =O,

—$NH_2$,

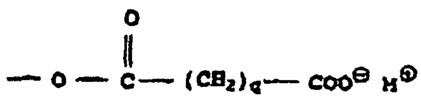
,

—$COO^{\ominus} M^{\oplus}$, —$SO_3^{\ominus} M^{\oplus}$, —$PO_3^{\ominus} M^{\oplus}$,
—O—$PO_3^{2\ominus} M_2^{\oplus}$, —O—$SO_3^{\ominus} M^{\oplus}$, —OH,

$-O-(CH_2-CH_2-O)_q H$

oder

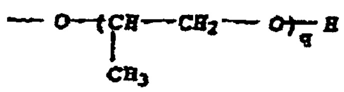
.

$M^+$ = l'hydrogène ou un ion de métal alcalin,
q = un nombre entier compris entre 1 et 100,
$R^1$, $R^2$, $R^5$, $R^6$ = indépendamment les uns des autres des groupes alkyle le cas échéant substitués à chaînes droites ou ramifiées identiques ou différents,
$R^{1'}$, $R^{2'}$, $R^{5'}$, $R^{6'}$ = indépendamment les uns des autres et indépendamment de $R^1$, $R^2$, $R^5$, $R^6$ les mêmes groupes que $R^1$,
$R^{10}$ = -H, un groupe alkyle en $C_1$ à $C_4$, -$CH=CH_2$, -C≡CH, -CN,

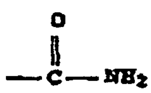
,

-$COO^-M^+$, -$COOCH_3$ ou -$COOC_2H_5$,
$R^{11}$ = un radical organique qui comporte au moins un groupe amino primaire, secondaire ou tertiaire ou au moins un groupe ammonium,

$R^{12}$ = indépendamment de $R^{11}$ les mêmes groupes que $R^{11}$ ou -H, -OH, un groupe alkyle en $C_1$ à $C_4$, $COO^-M^+$, -C≡CH,

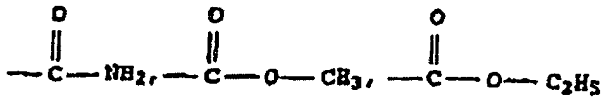

,

un groupe alkyle en $C_1$ à $C_4$ substitué par un hydroxy,
$R^{13}$ = -H, $-CH_3$ ou

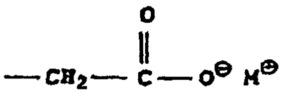

,

$R^{14}$ , $R^{15}$ = indépendamment les uns des autres des groupes alkyles ou cycloalkyles le cas échéant substitués à chaînes droites ou ramifiées identiques ou différents ou des groupes aryles en $C_6$ à $C_{20}$ substitués le cas échéant et $R^{16}$, $R^{17}$ = indépendamment les uns des autres l'hydrogène ou les mêmes groupes que $R^{14}$, $R^{15}$.

**8.** Procédé selon les revendications 1 à 7, **caractérisé en ce que** l'initiateur de polymérisation radicalaire est choisi parmi le groupe composé de dilaurylperoxyde, dibenzoylperoxyde, cumolhydroperoxyde, dicumylperoxyde, azodiisobutyronitrile et peroxodisulfate de potassium.

**9.** Procédé selon les revendications 1 à 8, **caractérisé en ce que** la polymérisation est entreprise selon le procédé de polymérisation par émulsion, microémulsion, miniémulsion, suspension, microsuspension, minisuspension, précipitation, polymérisation en masse ou polymérisation en solution ou selon une combinaison d'au moins deux des procédés cités.

**10.** Procédé selon les revendications 1 à 9, **caractérisé en ce que** la température de vitrification $T_v$ du bloc A est supérieure à 25°C et que celle du bloc B/A est inférieure à 25°C.

**11.** Copolymères blocs obtenus selon le procédé selon les revendications 1 à 10.

**12.** Utilisation des copolymères blocs selon la revendication 11 pour la préparation de pièces moulées, de feuilles et de mousses.

**13.** Pièces moulées, feuilles et mousses, contenant les copolymères blocs selon la revendication 11.